# FASCICULE DE BREVET EUROPEEN

(11) **EP 1 397 198 B1**
(45) Date de publication et mention de la délivrance du brevet: **18.04.2007**
(21) Numéro de dépôt: 02758517.3
(22) Date de dépôt: 24.06.2002
(51) Int. Cl.: B01F 17/54, A61K 8/04

(54) **EMULSIONS HUILE DANS HUILE COMPRENANT UNE SILICONE, DISPERSIONS DE TELLES EMULSIONS ET UTILISATION**
SILICON ENTHALTENDE ÖL-IN-ÖL EMULSIONEN, DISPERSIONEN SOLCHER EMULSIONEN UND VERWENDUNG
OIL-IN-OIL EMULSIONS COMPRISING A SILICONE, DISPERSIONS AND USE OF SAID EMULSIONS

(30) Priorité: 22.06.2001 FR 0108481
(43) Date de publication de la demande: 17.03.2004
(73) Titulaire: RHODIA CHIMIE, 92512 Boulogne Billancourt Cedex (FR)
(72) Inventeur: LANNIBOIS-DREAN, Hélène, F-94220 Charenton Le Pont (FR); RICCA, Jean-Marc, 10/01 Orchard Bel-Air (SG); DESTARAC, Mathias, F-75005 Paris (FR); OLIER, Philippe, F-69007 Lyon (FR)
(74) Mandataire: Boittiaux, Vincent
(86) Numéro de dépôt international: PCT/FR2002/002188
(87) Numéro de publication internationale: WO 2003/000396

(56) Documents cités:
- EP-A- 0 212 862
- EP-A- 0 388 582
- EP-A- 1 002 528
- WO-A-00/71606
- WO-A-00/71607
- DE-A- 4 341 114
- PATENT ABSTRACTS OF JAPAN vol. 013, no. 399 (C-632), 5 septembre 1989 (1989-09-05) & JP 01 143812 A (SHISEIDO CO LTD), 6 juin 1989 (1989-06-06)
- PATENT ABSTRACTS OF JAPAN vol. 013, no. 516 (C-656), 17 novembre 1989 (1989-11-17) & JP 01 210028 A (SHISEIDO CO LTD), 23 août 1989 (1989-08-23)
- DATABASE WPI Section Ch, Week 198743 Derwent Publications Ltd., London, GB; Class A96, AN 1987-304297 XP002195851 & JP 62 215510 A (SHISEIDO CO LTD), 22 septembre 1987 (1987-09-22)

## Description

La présente invention a pour objet des émulsions comprenant au moins deux liquides non aqueux et non miscibles entre eux, dont l'un d'eux est une silicone, et leur obtention.

Elle a de même pour objet des dispersions des émulsions avec une phase aqueuse externe, ainsi que des dispersions des émulsions avec une phase organique externe.

L'invention concerne aussi l'utilisation des émulsions et des dispersions, notamment dans le domaine des formulations cosmétiques et/ou dermatologiques.

On propose de plus en plus souvent aux consommateurs, d'avoir avec une même formulation, une pluralité d'effets simultanés et/ou successifs. De telles performances sont obtenues en combinant dans la formulation plusieurs substances actives.

Cela ne pose pas de difficulté majeure si les matières actives sont compatibles entre elles ainsi qu'avec le milieu de la formulation dans laquelle elles sont introduites.

Lorsque de tels cas de figure se posent, la solution à ces problèmes est d'encapsuler la matière active pour l'isoler de l'autre matière active ou du milieu dans lequel elle est introduite.

Une première solution de ce type a consisté à disperser la matière active à protéger ou la matière active dont on souhaite voir l'effet retardé, dans la phase dispersée d'une émulsion simple directe. Même s'il apporte une amélioration au problème, ce moyen de protection reste limité. En effet, la barrière huileuse créée entre la matière active de la phase dispersée et le milieu de la formulation n'est pas totalement efficace et l'on observe une diffusion de la matière active vers la formulation.

Une autre solution envisagée a été de préparer des émulsions multiples eau / huile / eau par exemple. Ainsi, il a été décrit entre autres, dans la demande de brevet français FR 01 02397 déposée le 21/02/01, des formulations cosmétiques ou dermatologiques comprenant au moins deux matières actives dans une émulsion multiple constituée d'une phase aqueuse interne dispersée dans une phase huileuse interne, l'ensemble étant dispersé dans une phase aqueuse externe ; l'émulsion multiple étant éventuellement mélangée à une émulsion simple constituée d'une phase huileuse externe dispersée dans une phase aqueuse externe. Selon cette invention, chacune des phases peut comprendre une matière active hydrophobe ou hydrophile selon la nature de la phase en question. De plus, l'émulsion inverse est stabilisée par un tensioactif et/ou un polymère amphiphile non ioniques ; l'émulsion inverse est stabilisée par un tensioactif et/ou un polymère amphiphile polyoxyalkyléné non ioniques ; l'émulsion externe directe est stabilisée par un tensioactif et/ou un polymère amphiphile non ioniques. Cette solution apporte des avantages certains lorsque l'une des matières actives est hydrophile.

L'un des objets de la présente invention est de proposer une solution alternative pour isoler d'une formulation, au moins une matière active hydrophobe.

Ces buts et d'autres sont atteints par la présente invention qui a donc pour premier objet une émulsion comprenant deux liquides non aqueux, L1 et L2, non miscibles entre eux, pour laquelle le liquide L1, qui représente la phase continue de l'émulsion est une silicone ; l'émulsion étant stabilisée par au moins un copolymère à blocs, dont une fraction selon la règle de Bancroft est soluble dans la phase dispersée, l'autre dans la phase continue, la fraction soluble dans la phase continue étant supérieure à la fraction soluble dans la phase dispersée.

Un deuxième objet de l'invention concerne une dispersion de l'émulsion précitée dans une phase aqueuse externe comprenant au moins un tensioactif polyoxyalkyléné non ionique et/ou au moins un polymère amphiphile polyoxyalkyléné non ionique.

Un troisième objet de l'invention est relatif à une dispersion de l'émulsion précitée dans une phase organique externe continue comprenant un agent stabilisant comportant au moins un copolymère peigne ou à blocs, dont une fraction est soluble dans la phase dispersée, l'autre dans la phase aqueuse externe continue, la fraction soluble dans la phase huileuse externe continue étant supérieure à la fraction soluble dans la phase dispersée.

Un autre objet de l'invention est constitué par un procédé d'obtention de l'émulsion selon l'invention, dans lequel on prépare, d'une part un premier mélange comprenant la phase dispersée comprenant éventuellement la matière active, et d'autre part, un deuxième mélange comprenant la phase continue et le polymère ; puis on ajoute le premier mélange au second, sous agitation.

L'obtention de la dispersion de l'émulsion dans une phase aqueuse externe continue constitue de même un objet de l'invention. Il consiste à préparer un mélange comprenant la phase aqueuse externe continue comprenant le tensioactif et/ou le polymère amphiphile non ionique, auquel on ajoute l'émulsion selon l'invention, puis on ajoute éventuellement une solution aqueuse d'épaississant à l'émulsion ainsi obtenue.

Pour ce qui concerne l'obtention de la dispersion de l'émulsion dans une phase organique externe, il consiste à préparer un mélange comprenant la phase organique externe continue comprenant l'agent stabilisant, auquel on ajoute l'émulsion selon l'invention.

Enfin, l'invention concerne l'utilisation de l'émulsion, de la dispersion en phase aqueuse et de la dispersion en phase organique, dans le domaine du traitement de la peau et/ou du cheveu.

L'émulsion et les dispersions selon l'invention permettent donc d'isoler, de protéger, une matière active d'une autre matière active et/ou de la formulation dans laquelle elle est introduite, afin d'éviter, pendant une durée suffisante, toute dégradation qui serait le résultat d'une mise en contact de la matière active avec une autre matière active / formulation. L'invention représente un moyen efficace pour protéger des matières actives hydrophobes sensibles à l'hydrolyse, de même que des matières actives hydrophobes sensibles à une oxydation par l'oxygène de l'air.

Il est à noter, et cela constitue un autre avantage de la présente invention, que l'on peut observer un retard sur l'effet apporté par la matière active qui se trouve dans la phase huileuse dispersée de l'émulsion.

En outre, l'émulsion et les dispersions sont un moyen de vectoriser une matière active. Pour ne citer qu'un exemple, les émulsions et dispersions selon l'invention permettent de combiner dans une même formulation, d'une part une silicone dont l'effet conditionnant du cheveu peut être exercé dès l'application, et d'autre part une huile végétale dont l'effet nourrissant/réparateur du cheveu ne sera obtenu qu'après diffusion de cette huile à travers la barrière silicone une fois déposée sur le cheveu.

Enfin, l'effet sensoriel résultant de l'application d'une formulation comprenant l'émulsion ou l'une des dispersions selon l'invention, est modifié favorablement, ainsi que la texture de la formulation.

Mais d'autres avantages et caractéristiques de l'invention apparaîtront plus clairement à la lecture de la description qui va suivre.

Ainsi que cela a été indiqué plus haut, l'émulsion selon l'invention comprend deux liquides, L1 et L2, non aqueux, non miscibles entre eux et dont l'un d'eux (L1) est une silicone.

Par non miscible, on entend tout liquide qui, à température ambiante, présente une solubilité dans un autre liquide ne dépassant pas 10 % en poids.

Peuvent convenir en tant que liquides L1 ou L2, des composés se présentant sous forme liquide à la température ambiante (20-30°C), et/ou à la température de préparation de l'émulsion.

Comme indiqué auparavant, le liquide L1 est choisi parmi les silicones.

Sont susceptibles de convenir à la mise en oeuvre de l'invention, seules ou en mélanges, de silicones constituées en tout ou partie de motifs de formule :

R'₃₋ₐRₐSiO_{1/2} (motif M) et/ou R₂SiO (motif D)

formules où :
- a est un entier de 0 à 3 ;
- les radicaux R sont identiques ou différents et représentent :
   - un groupe hydrocarboné aliphatique saturé ou insaturé contenant de 1 à 10 atomes de carbone ;
   - un groupe hydrocarboné aromatique contenant de 6 à 13 atomes de carbone ;
   - un groupe organique polaire lié au silicium par une liaison Si-C ou Si-O-C ;
- les radicaux R' sont identiques ou différents et représentent :
   - un groupe hydrocarboné aliphatique saturé ou insaturé contenant de 1 à 10 atomes de carbone ;
   - un groupe hydrocarboné aromatique contenant de 6 à 13 atomes de carbone ;
   - une fonction -OH ;
   - un groupe amino ou amido contenant de 1 à 6 atomes de carbone, lié au silicium par une liaison Si-N.

De préférence au moins 80% des radicaux R représentent un groupe méthyle.

Ces silicones peuvent éventuellement comprendre, de préférence moins de 5 % molaire, des motifs de formules T et/ou Q :

RSiO_{3/2} (motif T) et/ou SiO₂ (motif Q)

formule dans laquelle R a la définition donnée ci-dessus.

A titre d'exemples de radicaux hydrocarbonés aliphatiques ou aromatiques R, on peut citer les groupes :
- alkyle, de préférence alkyle en C₁-C₁₀ éventuellement halogéné, tels que méthyle, éthyle, octyle, trifluoropropyle ;
- alcoxyalkylène, plus particulièrement en C₂-C₁₀, de préférence en C₂-C₆, tels que -CH₂-CH₂-O-CH₃ ;
- alcényles, de préférence alcényle en C₂-C₁₀, tels que vinyle, allyle, hexényle, décényle, décadiényle ;
- alcényloxyalkylène tels que -(CH₂)₃-O-CH₂-CH=CH₂, ou alcényloxyalcoxy alkyle tels que -(CH₂)₃-OCH₂-CH₂-O-CH=CH₂ dans lesquels les parties alkyle sont de préférence en C₁-C₁₀ et les parties alcényles sont de préférence en C₂-C₁₀ ;
- aryles, de préférence en C₆-C₁₃, tels que phényle.

A titre d'exemples de groupes organiques polaires R, on peut citer les groupes:
- hydroxyfonctionnels tels que des groupes alkyle substitués par un ou plusieurs groupes hydroxy ou di(hydroxyalkyl)amino et éventuellement interrompu par un ou plusieurs groupes bivalents hydroxyalkylamino. Par alkyle on entend une chaîne hydrocarbonée de préférence en C₁-C₁₀, mieux encore en C₁-C₆; des exemples de ces groupes sont -(CH₂)₃-OH ; -(CH₂)₄N(CH₂CH₂OH)₂ ; -(CH₂)₃-N(CH₂CH₂OH)-CH₂-CH₂-N(CH₂CH₂OH)₂ :
- aminofonctionnels tels que alkyle substitué par un ou plusieurs groupes amino ou aminoalkylamino où alkyle est tel que défini ci-dessus ; des exemples en sont -(CH₂)₃-NH₂ ; (CH₂)₃-NH-(CH₂)₂NH₂ ;
- amidofonctionnels tels que alkyle substitué par un ou plusieurs groupes acylamino et éventuellement interrompu par un ou plusieurs groupes bivalents alkyl-CO-N< où alkyle est tel que défini ci-dessus et acyle représente alkylcarbonyle ; un exemple est le groupe -(CH₂)₃-N(COCH₃)-(CH₂)₂NH(COCH₃) ;
- carboxyfonctionnels tels que carboxyalkyle éventuellement interrompu par un ou plusieurs atomes d'oxygène ou de soufre où alkyle est tel que défini ci-dessus ; un exemple est le groupe -CH₂-CH₂-S-CH₂-COOH.

A titre d'exemples de radicaux R¹, on peut citer les groupes :
- alkyle, de préférence alkyle en C₁-C₁₀ éventuellement halogéné, tels que méthyle, éthyle, octyle, trifluoropropyle ;
- aryles, de préférence en C₆-C₁₃, tels que phényle ;
- aminofonctionnels tels que alkyle ou aryle substitué par amino, alkyle étant de préférence en C₁-C₆ et aryle désignant un groupe aromatique cyclique hydrocarboné de préférence en C₆-C₁₃ tel que phényle ; des exemples en sont éthylamino, phénylamino ;
- amidofonctionnels tels que alkylcarbonylamino où alkyle est de préférence en C₁-C₆; des exemples en sont méthylacétamido.

A titre d'exemples concrets de "motifs D" on peut citer : (CH₃)₂SiO ; CH₃(CH=CH₂)SiO ; CH₃(C₆H₅)SiO ; (C₆H₅)₂SiO ; CH₃(CH₂-CH₂-CH₂OH)SiO.

A titre d'exemples concrets de "motifs M", on peut citer : (CH₃)₃SiO_{½} ; (CH₃)₂(OH)SiO_{½}; (CH₃)₂(CH=CH₂)SiO_{½}; (OCH₃)₃SiO_{½} : [O-C(CH₃)=CH)₂]₃SiO_{½} : [ON=C(CH₃)]₃SiO_{½} ; (NH-CH₃)₃SiO_{½} ; (NH-CO-CH₃)₃SiO_{½}.

A titre d'exemples concrets de "motifs T", on peut citer : CH₃SiO_{3/2} ; (CH=CH₂)SiO_{3/2}.

Lorsque les silicones contiennent des radicaux R réactifs et/ou polaires (tels que OH, vinyle, allyle, héxényle, aminoalkyles ....), ces derniers ne représentent généralement pas plus de 5% du poids de la silicone, et de préférence pas plus de 1% du poids de la silicone.

Peuvent être utilisés en tant que liquide L1, des huiles volatiles comme l'hexaméthyldisiloxane, l'octaméthyldisiloxane, le décaméthyltétrasiloxane, le dodécaméthylpentasiloxane, le tétradécaméthylhexasiloxane, l'hexadécaméthylhexa siloxane ; l'heptaméthyl-3[(triméthyl-silyl)oxy]trisiloxane, l'hexaméthyl-3,3 bis[(triméthylsilyl)oxy]trisiloxane ; l'hexaméthylcyclotrisiloxane, l'octaméthylcyclotétrasiloxane, le décaméthylcyclopentasiloxane, le dodécaméthylcyclohexasiloxane, le pentaméthyl[(triméthylsilyl)oxy]cyclotrisiloxane.

On peut de même mettre en oeuvre des silicones non volatiles comme les huiles et gommes polydiméthylsiloxanes et α,ω-bis(hydroxy) polydiméthylsiloxanes ainsi que les gommes polydiméthylsiloxanes, polyphénylméthylsiloxane et α,ω-bis(hydroxy)poly diméthylsiloxanes peuvent de même être utilisés en tant que liquide L1.

On préfère plus particulièrement les huiles α,ω-bis(triméthyl)polydiméthyl siloxanes, les huiles α,ω-bis(hydroxy)polydiméthyl siloxanes.

A titre représentatif de silicones convenant tout particulièrement à la présente invention, on peut notamment citer les silicones de type polydiméthylsiloxane (diméthicone) et diphényldiméthicone.

En ce qui concerne le liquide L2, ce dernier est plus particulièrement choisi parmi :
- les huiles/graisses/cires organiques d'origine animale ou d'origine végétale ;
- les huiles/cires minérales ;
- les produits issus de l'alcoolyse des huiles précitées ;
- les huiles essentielles ;
- les mono-, di- et tri- glycérides ;
- les acides gras, saturé ou non, comprenant 10 à 40 atomes de carbone ; les esters de tels acides et d'alcool comprenant 1 à 6 atomes de carbone ;
- les monoalcools, saturés ou non, comprenant 2 à 40 atomes de carbone ;
- les polyols comprenant 2 à 10 atomes de carbone ;
ces composés étant utilisés seuls ou en mélange.

Comme huiles / graisses / cires organiques d'origine animale, on peut citer en autres, l'huile de cachalot, l'huile de baleine, l'huile de phoque, l'huile de squale, l'huile de foie de morue, les graisses de porc, de mouton (suifs), le perhydrosqualène, la cire d'abeille, seules ou en mélange.

A titres d'exemples d'huiles / graisses / cires organiques d'origine végétale, on peut mentionner, entre autres, l'huile de colza, l'huile de tournesol, l'huile d'arachide, l'huile d'olive, l'huile de noix, l'huile de maïs, l'huile de soja, l'huile d'avocat, l'huile de lin, l'huile de chanvre, l'huile de pépins de raisin, l'huile de coprah, l'huile de palme, l'huile de graines de coton, l'huile de babassu, l'huile de jojoba, l'huile de sésame, l'huile de ricin, l'huile de macadamia, l'huile d'amande douce, la cire de carnauba, le beurre de karité, le beurre de cacao, le beurre de cacahuète, seuls ou en mélange.

En ce qui concerne les huiles / cires minérales, on peut citer entre autres les huiles naphténiques, paraffiniques (vaseline), isoparaffiniques, les cires paraffiniques, seules ou en mélange.

Les produits issus de l'alcoolyse des huiles précitées peuvent aussi être utilisés.

Parmi les huiles essentielles, on peut citer sans intention de s'y limiter, les huiles et/ou essences de menthe, de menthe verte, de menthe poivrée, de menthol, de vanille, de cannelle, de laurier, d'anis, d'eucalyptus, de thym, de sauge, de feuille de cèdre, de noix de muscade, de citrus (citron, citron vert, pamplemousse, orange), de fruits (pomme, poire, pêche, cerise, prune, fraise, framboise, abricot, ananas, raisin, etc.), seules ou en mélanges.

Concernant les acides gras, ces derniers, saturés ou non, comprennent 10 à 40 atomes de carbone, plus particulièrement 18 à 40 atomes de carbone, et peuvent comprendre une ou plusieurs insaturations éthyléniques, conjuguées ou non. Il est à noter que lesdits acides peuvent comprendre un ou plusieurs groupements hydroxyles.

Comme exemples d'acides gras saturés, on peut citer les acides palmitique, stéarique, béhénique.

Comme exemples d'acides gras insaturés, on peut citer les acides myristoléique, palmitoléique, oléique, érucique, linoléique, linolénique, arachidonique, ricinoléique, ainsi que leurs mélanges.

Pour ce qui a trait aux esters d'acides gras, on peut citer les esters des acides précédemment listés, pour lesquels la partie dérivant de l'alcool comprend 1 à 6 atomes de carbone, comme les esters de méthyle, d'éthyle, de propyle, d'isopropyle, etc.

Comme exemple d'alcools, on peut citer l'éthanol et ceux correspondants aux acides précités.

La phase organique (L2) interne peut de même être choisie parmi les mono-, di- et tri- glycérides.

Parmi les polyols convenables, on peut citer de préférence le glycérol.

Enfin, il est précisé qu'il n'est pas exclu que le liquide L2 comprenne une quantité d'eau qui ne dépasse pas la limite de solubilité de l'eau dans L2 (à une température comprise entre 20 et 30°C).

La proportion pondérale en liquide L2 par rapport au liquide L1, est plus particulièrement comprise entre 10/90 et 90/10, de préférence comprise entre 30/70 et 50/50.

L'une des caractéristiques de l'invention est que l'émulsion huile dans huile est stabilisée par la présence d'au moins un copolymère à blocs, dont une fraction est soluble dans la phase dispersée, l'autre dans la phase continue. En outre, la règle de Bancroft peut être appliquée à ce copolymère puisque la fraction soluble dans la phase continue est supérieure à la fraction soluble dans la phase dispersée.

Plus précisément, ledit copolymère est choisi parmi ceux qui sont solubles dans le liquide L1 (silicone). Plus particulièrement, par soluble, on entend désigner des copolymères qui, lorsqu'ils sont mélangés avec le liquide L1, à une concentration comprise entre 0,1 et 10 % en poids dudit liquide L1 et à 20°C, se trouvent sous la forme d'une solution dans tout ou partie de la gamme de concentration indiquée.

En outre, ledit copolymère est choisi parmi ceux qui, lorsqu'ils sont mélangés avec le liquide L2, à une concentration comprise entre 0,1 et 10 % en poids dudit liquide L2 et à 20°C, se trouvent sous la forme d'une dispersion dans tout ou partie de la gamme de concentration indiquée. En effet, le copolymère est en partie soluble dans ledit liquide.

Enfin, ledit copolymère mis en oeuvre est celui qui, à une concentration donnée dans la gamme indiquée ci-dessus et à 20°C, se présente simultanément sous la forme d'une solution dans L1 et sous la forme d'une dispersion dans L2.

Le copolymère n'est avantageusement pas un polymère réticulé.

Il est précisé à titre simplement indicatif, que le copolymère présente une masse molaire en nombre inférieure ou égale à 100000 g/mol, plus particulièrement comprise entre 1000 et 50000 g/mol. La masse molaire en nombre est ici donnée avec une valeur absolue, et peut être avantageusement déterminée en combinant les analyses MALLS (multi-angle, light scattering) et une chromatographie par perméation de gel. Précisons que cette méthode est particulièrement appropriée pour des copolymères de toute masse. Pour des copolymères de masses faibles, notamment inférieures ou égales à environ 20000 g/mol, on peut également utiliser la RMN, qui donne, elle aussi, une valeur absolue pour les masses de copolymère.

De manière avantageuse, si chacun des blocs du copolymère représentait un polymère (même taille et composition que les blocs), alors les monomères constituant chacun des blocs seraient choisis de telle sorte que chaque polymère soit soluble, dans les conditions de température et de concentrations mentionnées ci-dessus, soit dans le liquide L1 (pour le polymère dérivant des blocs solubles dans L1) soit dans le liquide L2 (pour le polymère dérivant des blocs solubles dans L2).

Plus particulièrement, la fraction du copolymère qui est soluble dans L1 dérive d'un polysiloxane pouvant être choisi parmi les silicones listées pour L1.

De préférence, le polysiloxane est porteur de fonctions réactives, comme les fonctions -OH, -NH₂, entre autres.

En ce qui concerne la fraction soluble dans L2, celle-ci dérive, de préférence, de la polymérisation d'au moins un monomère choisi parmi les monomères suivants :
- les esters des acides mono- ou poly- carboxyliques, linéaires, ramifiés, cycliques ou aromatiques, comprenant au moins une insaturation éthylénique ;
- les nitriles αβ-éthyléniquement insaturés, les éthers vinyliques, les esters vinyliques, les monomères vinylaromatiques, les halogénures de vinyle ou de vinylidène ;
- les monomères hydrocarbonés, linéaires ou ramifiés, aromatiques ou non, comprenant au moins une insaturation éthylénique ;
   seuls ou en mélanges, ainsi que les macromonomères dérivant de tels monomères.

Plus précisément, lesdits monomères peuvent être choisis parmi :
- les esters d'acide (méth)acrylique avec un alcool comprenant 1 à 12 atomes de carbone comme le (méth)acrylate de méthyle, le (méth)acrylate d'éthyle, le (méth)acrylate de propyle, le (méth)acrylate de n-butyle, le (méth)acrylate de t-butyle, le (méth)acrylate d'isobutyle, l'acrylate de 2-éthylhexyl, le (méth)acrylate d'hydroxyéthyl ;
- l'acétate de vinyle (permettant d'obtenir l'alcool polyvinylique partiellement ou totalement désacétylé), le Versatate^{®} de vinyle, le propionate de vinyle, le chlorure de vinyle, le chlorure de vinylidène, le méthyl vinyléther, l'éthyl vinyléther, le (méth)acrylonitrile, la N-vinylpyrrolidone, le vinylformamide, le vinylacétamide, la vinylamine ;
- le (méth)acrylamide, les N-alkyl (méth)acrylamide comme l'isopropyl acrylamide, le N-méthylol (méth)acrylamide ;
- le styrène, l'α-méthylstyrène, le vinyltoluène, le butadiène, le chloroprène, l'isoprène ;
seuls ou en mélanges, ainsi que les macromonomères dérivant de tels monomères.

Rappelons que le terme macromonomère désigne une macromolécule portant une ou plusieurs fonctions polymérisables.

Il est à noter que la fraction soluble dans L2 du copolymère mis en oeuvre en tant que stabilisant de l'émulsion selon l'invention peut être obtenue à partir des monomères précités, combinés à des monomères de nature chimique différente, comme par exemple des monomères hydrophiles, non ionique ou ioniques.

A titre d'exemples de monomères hydrophiles ioniques, plus particulièrement anioniques ou potentiellement anioniques selon les conditions de pH, on peut citer notamment :
- les acides mono- ou poly- carboxyliques linéaires, ramifiés, cycliques ou aromatiques, les dérivés N-substitués de tels acides, les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs dérivés sulfoniques ou phosphoniques, les macromonomères dérivant de tels monomères, ainsi que les sels correspondants.

A titre d'exemples de monomères susceptibles de ce type, peuvent convenir, sous forme acide ou sous la forme de sel de métal alcalin (sodium, potassium), ou d'ammonium :
- l'acide (méth)acrylique, l'acide 2-propène 1-sulfonique, l'acide méthallyl sulfonique, l'acide styrène sulfonique, l'acide α-acrylamido méthylpropane sulfonique, le 2-sulfoéthylène méthacylate, l'acide sulfopropyl (méth)acrylique, l'acide bis-sulfopropyl (méth)acrylique, le monoester phosphate d'acide hydroxyéthyl méthacrylique ;
- l'acide vinyl sulfonique, l'acide vinylbenzène sulfonique, l'acide vinyl phosphonique, l'acide vinyl benzoïque;
- le N-méthacryloyl alanine, le N-acryloyl-hydroxy-glycine ;
   seuls ou en mélanges, ainsi que les macromonomères dérivant de tels monomères.

Parmi les monomères hydrophiles non ioniques, figurent entre autres les amides des acides mono- ou poly- carboxyliques, linéaires, ramifiés, cycliques ou aromatiques, comprenant au moins une insaturation éthylénique ou dérivés, comme le (méth)acrylamide, le N-méthylol (méth)acrylamide ; certains esters dérivant de l'acide (méth)acrylique comme par exemple le (méth)acrylate de 2-hydroxyéthyle ; les esters vinyliques permettant d'obtenir des blocs alcool polyvinylique après hydrolyse, comme l'acétate de vinyle, le Versatate^{®} de vinyle, le propionate de vinyle.

Si le copolymère entrant dans la composition de l'émulsion est obtenu en partie à partir de monomères hydrophiles, il est précisé que leur teneur est telle que le copolymère réponde aux critères énoncés auparavant, à savoir le fait qu'une fraction dudit copolymère est soluble dans L1, l'autre dans L2 ; la fraction soluble dans le liquide constituant la phase continue de l'émulsion étant plus élevée que celle soluble dans la phase dispersée.

Selon un mode de réalisation préféré de la présente invention, le copolymère entrant dans la composition de l'émulsion est un polymère linéaire à blocs. De préférence, ledit copolymère comprend au moins trois blocs.

Les copolymères utilisables dans le cadre de la présente invention peuvent être obtenus, de manière avantageuse, par voie radicalaire, de préférence contrôlée.

De préférence, on peut obtenir de tels polymères en mettant en oeuvre un procédé de préparation par activation thermique de copolymères hybrides silicones et organiques comprenant des motifs (I) :

RₓU_{y}SiO_{[4-(x+y)]/2} (I)

dans lesquels:
- x est égal à 0, 1, 2 ou 3, y est égal à 0, 1, 2 ou 3 avec 2 ≤ (x+y) ≤ 3 et y est différent de 0 pour au moins un des motifs du copolymère hybride,
   - les symboles R, identiques ou différents, représentent :
      · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
      · un radical cycloalkyle contenant entre 5 et 8 atomes de carbone cycliques, éventuellement substitué,
      · un radical aryle contenant entre 6 et 12 atomes de carbone pouvant être substitué, de préférence phényle ou dichlorophényle,
      · une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
   - les symboles U, identiques ou différents, représentent (II) : 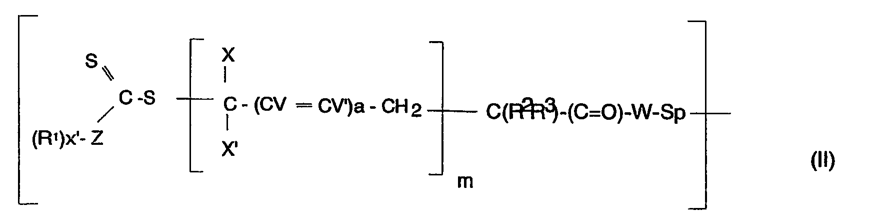
dans lequel :
- x' = 1, 2,3 ou 4 en fonction de la valence de Z,
- Z, identiques ou différents, représentent un atome de carbone, soufre, oxygène, phosphore, azote et/ou une valence libre,
- R¹, identiques ou différents, représentent :
   - un groupe (i) alkyle, acyle, aryle, alcène ou alcyne éventuellement substitué,
   - un cycle (ii) carboné, saturé ou non, éventuellement substitué et/ou aromatique, et/ou
   - un hétérocycle (iii), saturé ou non, éventuellement substitué,
   - ces radicaux (i), (ii) et (iii) pouvant être substitués avantageusement par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
   - un groupement (iv) de formule -CₙF(₂ₙ₊₁) avec n compris entre 1 et 20,
   - un groupement (v) de formule suivante : 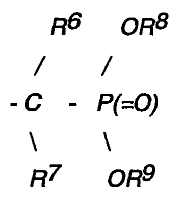
dans laquelle :
- R⁶, R⁷, identiques ou non, sont choisis parmi un groupe halogène, -NO₂, -SO₃R¹⁰, -NCO, -CN, -OR¹⁰, -SR¹⁰, -N(R¹⁰)₂, -COOR¹⁰, -O₂CR¹⁰, -CON(R¹⁰)₂, -NCO(R¹⁰)₂ et -CₙF₍₂ₙ₊₁₎ avec n compris entre 1 et 20, de préférence égal à 1;
- avec R¹⁰ représentant :
   * un atome d'hydrogène,
   * ou un radical alkyle, alcényle, alcynyle, cycloacényle, cycloalcynyle, alkaryle, aralkyle, hétéroaryle ou aryle éventuellement condensé à un hétérocycle aromatique ou non; ces radicaux pouvant éventuellement être substitués par :
      - un ou plusieurs groupes identiques ou différents, choisis parmi les atomes d'halogènes, =O, =S, -OH, alcoxy, SH, thioalcoxy, NH₂, mono ou di-alkylamino, CN, COOH, ester, amide, CₙF₍₂ₙ₊₁₎ et/ou éventuellement interrompu par un ou plusieurs atomes choisis parmi O, S, N, P;
      - ou un groupe hétérocyclique éventuellement substitué par un ou plusieurs groupes tels que définis précédemment ;
      - ou R⁶ et R⁷ forment ensemble avec l'atome de carbone auquel ils sont attachés, un groupe =O, =S, un cycle hydrocarboné ou un hétérocycle ;
- et R⁸ et R⁹, identiques ou différents, représentent un groupe tel que défini ci-dessus pour R¹⁰; ou forment ensemble une chaîne hydrocarbonée en C₂-C₄, éventuellement interrompue par un hétéroatome choisi parmi O, S et N ;
- V et V', identiques ou différents, représentent : H, un groupe alkyle ou un halogène,
- X et X', identiques ou différents, représentent H, un halogène ou un groupe R⁴, OR⁴, O₂COR⁴, NHCOH, OH, NH₂, NHR⁴, N(R⁴ )₂, (R⁴)₂N⁺O⁻, NHCOR⁴, CO₂H, CO₂R⁴, CN, CONH₂, CONHR⁴ ou CONR⁴₂, dans lesquels R⁴ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- R² et R³, identiques ou différents, représentent :
   - un groupe (i) alkyle, acyle, aryle, alcène ou alcyne éventuellement substitué,
   - un cycle (ii) carboné, saturé ou non, éventuellement substitué et/ou aromatique,
   - un hétérocycle (iii), saturé ou non, éventuellement substitué,
   - un atome d'hydrogène, des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
   - les radicaux (i), (ii) et (iii) pouvant être substitués avantageusement par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
   - W, identiques ou différents, représentent un radical divalent choisi parmi -O-, -NR⁴-, -NH-, -S-,
   - Sp, identiques ou différents, représentent une rotule constituée d'un radical divalent organique de formule -(CH₂)_{x'''}- dans lequel x"' est compris entre 1 et 20, ce radical pouvant être substitué et/ou contenir au moins un hétéroatome,
   - a = 0 ou 1,
   - m ≥ 1, et lorsque m > 1 les motifs unitaires répétitifs d'indice m sont identiques ou différents,
procédé dans lequel on met en contact :
- au moins un monomère éthyléniquement insaturé de formule (III):

   CXX' (= CV - CV')ₐ = CH₂,
- un composé silicone précurseur comprenant des motifs, identiques ou différents de formule (IV):

   RₓU'_{y}SiO_{[4-(x+y)]/2}

   dans lequel :
   - R, x et y correspondent aux valeurs données précédemment,
      et le radical monovalent U' est selon la formule suivante (V) : 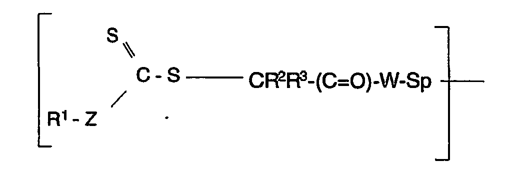
   - et un initiateur de polymérisation radicalaire.

L'initiateur de polymérisation radicalaire peut être choisi parmi les initiateurs classiquement utilisés en polymérisation radicalaire. Il peut s'agir par exemple d'un des initiateurs suivants :
- les peroxydes d'hydrogène, tels que l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-dirnéthylène isobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que : les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs ; les persulfates, perborate ou perchlorate de métaux alcalins ou d'ammonium en association avec un bisulfite de métal alcalin, tel que le métabisulfite de sodium, et des sucres réducteurs ; les persulfates de métal alcalin en association avec un acide arylphosphinique, tel que l'acide benzène phosphonique et autres similaires, et des sucres réducteurs.

La quantité d'initiateur à utiliser est déterminée de manière à ce que la quantité de radicaux générés soit d'au plus 20 % en mole par rapport à la quantité de composé précurseur silicone (IV), de préférence d'au plus 5 % en mole.

Comme monomère éthyléniquement insaturé, on utilise ceux qui ont été cités précédemment pour définir la fraction du copolymère soluble dans L2.

Précisons en outre que le butadiène et le chloroprène correspondent au cas où a = 1 dans la formule (I) et (III),

Pour la préparation des copolymères hybrides de formule (I) pour lesquels X = H et X' = NH₂, on utilise de préférence à titre de monomères éthyléniquement insaturés les amides de la vinylamine, par exemple le vinylformamide ou le vinylacétamide. Puis le copolymère obtenu est hydrolysé à pH acide ou basique.

Pour la préparation des copolymères hybrides de formule (I) pour lesquels X = H et X' = OH, on utilise de préférence à titre de monomères éthyléniquement insaturés les esters vinyliques d'acide carboxylique, comme par exemple l'acétate de vinyle. Puis le copolymère obtenu est hydrolysé à pH acide ou basique.

Les types et quantités de monomères copolymérisables mis en oeuvre selon la présente invention varient en fonction de l'application finale particulière à laquelle est destiné le copolymère hybride.

Selon une première variante préférée, le copolymère hybride silicone et organique est constitué d'un squelette silicone linéaire comprenant de 1 à 300 motifs de formule (I), de préférence 1 à 200, et portant de 1 à 50 radicaux U, de préférence 1 à 10.

Selon une deuxième variante, au moins un des radicaux monovalents U' est de préférence de formule (VI) : 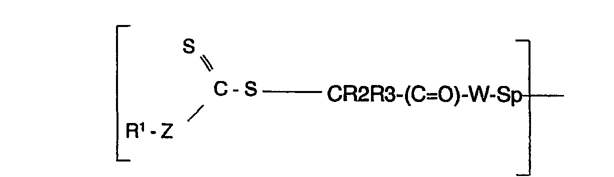 dans laquelle R² et R³, identiques ou différents, représentent un atome d'hydrogène, un groupe cyano, allkoxycarbonyle, alkyle, acyle, aryle, alcène ou alcyne éventuellement substitué; et W est de définition identique à celle donnée précédemment, et de préférence est égal à un atome d'oxygène. A titre d'exemples, on citera les précurseurs silicones dans lesquelles U' correspond à :

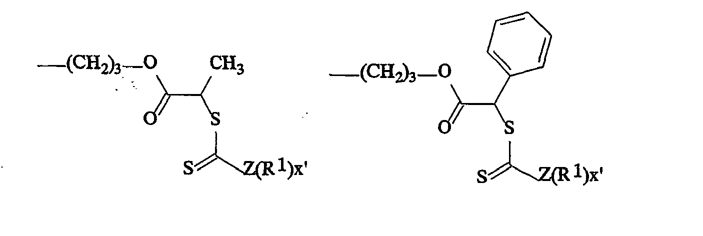

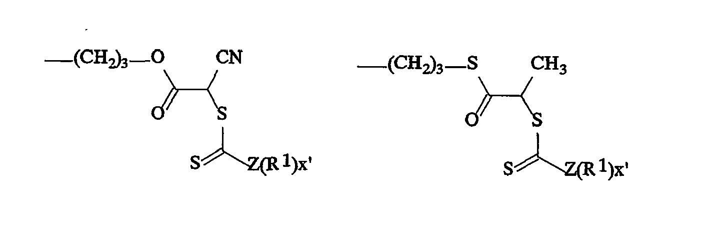

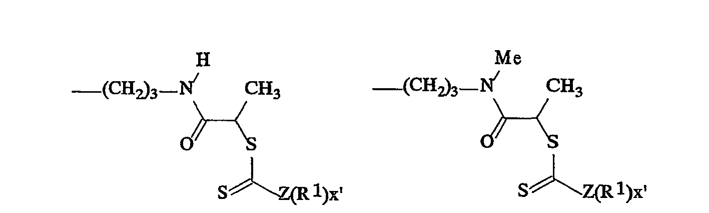

Selon une troisième variante de l'invention, au moins une partie des radicaux monovalents U' de(s) précurseur(s) silicone(s) (IV) et donc au moins une partie des groupements U du copolymère hybride obtenu sont tels que Z soit un atome d'oxygène et/ou un atome de soufre.

Selon une quatrième variante, outre des motifs de formule (I), le copolymère hybride silicone et organique selon l'invention peut comprendre des motifs RₓU_{y}F_{z}SiO_{[4-(x+y+z)]/2} (XIV) dans lesquels :
- x est égal à 0, 1, 2 ou 3, y est égal à 0, 1, 2 ou 3 et z est égal à 1, 2 ou 3 avec avec 2 ≤ (x+y+z) ≤ 3,
- et F est un groupement porteur d'au moins une fonction tels que hydroxy, alkoxy, thiol, amine, époxy et/ou polyether.

Ces groupements F peuvent éventuellement apporter des propriétés complémentaires et/ou supplémentaires aux copolymères hybrides préparés selon le procédé de l'invention. Ils peuvent être notamment contenus initialement au sein du précurseur silicone de formule (IV).

Outre des copolymères hybrides avec des segments organiques homopolymères, le procédé qui vient d'être décrit permet de préparer des polymères hybrides porteurs de groupements organiques à blocs (c'est-à-dire multiblocs). Pour cela, le procédé consiste à répéter la mise en oeuvre du procédé de préparation précédemment décrit en utilisant :
- des monomères différents de la mise en oeuvre précédente, et
- à la place du composé silicone précurseur (II), le copolymère hybride comprenant des motifs (I) à blocs issu de la mise en oeuvre précédente.

Selon ce procédé de préparation de copolymères à blocs, lorsque l'on souhaite obtenir des copolymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Comme pour le procédé de polymérisation de copolymère monobloc, ce procédé de polymérisation de copolymères à blocs présente l'avantage de conduire à des copolymères à blocs présentant un indice de polydispersité faible. Il permet également de contrôler la masse moléculaire des polymères à blocs.

Le composé silicone précurseur de formule générale (IV) utilisé au sein du procédé de préparation de copolymères hybrides selon l'invention peut être obtenu par réaction :
(i) d'une silicone comprenant des motifs de formule (VII) :

   RₓU"_{y}SiO_{[4-(x+y)]/2}

   où le radical monovalent U" est selon la formule suivante (VIII): 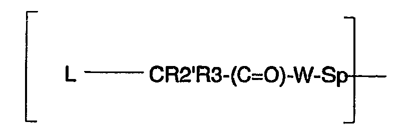 dans laquelle :
   - W et Sp sont de définitions identiques à celles données précédemment,
   - L est un groupement électrofuge, par exemples : Br-, Cl⁻, l⁻, OTs⁻, OMs⁻, (C₆H₆)-(C=O)-O-, (CH₃)-(C=O)-O⁻, (CF₃)-(C=O)-O⁻.
(ii) avec un composé choisi parmi ceux de formules générales suivantes (IX), (X) ou (XI) : 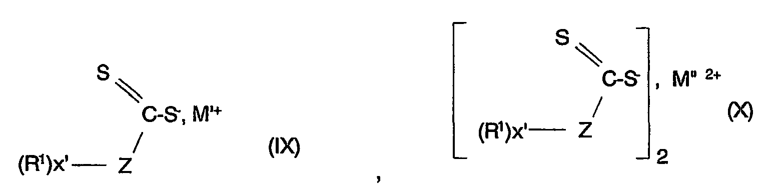 et 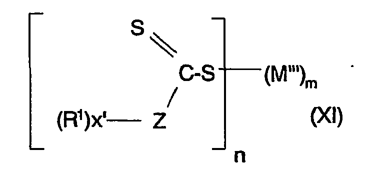
dans lesquelles :
- M'⁺ représente K⁺, Na⁺, NR₄⁺, ou PR₄⁺, R étant de définition similaire à celle donnée pour R de la formule (I),
- M"²⁺ représente un métal alcalino-terreux tels que Ca²⁺, Ba²⁺ et Sr²⁺⁺,
- M'" représente Zn, Cd, m est égal à 1 ou 2, n est égal à 1, 2, 3 ou 4 et de préférence m est égal à 1 et n est égal à 2.

Cette silicone de formule (VII) peut être notamment obtenue à partir (i) d'une silicone comprenant des motifs de formule (XII) :RₓU"'_{y}SiO_{[4-(x+y)]/2} où le radical monovalent U"' est de formule (XIII) : -Sp-WH et (ii) d'un composé de formule :

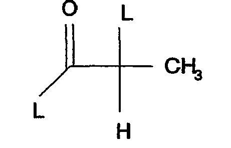

La polymérisation peut être réalisée en masse, en solution ou en émulsion. De préférence, elle est mise en oeuvre en émulsion.

De préférence, le procédé est mis en oeuvre de manière semi-continue.

La température peut varier entre la température ambiante et 150°C selon la nature des monomères utilisés.

En général, au cours de la polymérisation, la teneur instantanée en copolymère par rapport à la quantité instantanée en monomère et copolymère est comprise entre 50 et 99 % en poids, de préférence entre 75 et 99 %, encore plus préférentiellement entre 90 et 99 %. Cette teneur est maintenue, de manière connue, par contrôle de la température, de la vitesse d'addition des réactifs et de l'initiateur de polymérisation.

Enfin, le procédé est généralement mis en oeuvre en l'absence de source UV.

Il est à noter qu'il peut être avantageux de modifier chimiquement les extrémités xanthates du copolymère obtenu, en mettant en oeuvre toute méthode connue de l'homme de l'art, comme par exemple une étape d'hydrolyse.

Le procédé et les polymères obtenus par ce procédé sont décrits dans la demande française n° 00 09722 déposée le 25/07/00.

D'autres méthodes de synthèses de ce type de copolymère peuvent être mises en oeuvre, notamment celle décrite dans les demandes internationales WO 00/71606 et WO 00/71607.

Selon un mode de réalisation particulier de l'invention, la quantité de copolymère représente de 0,5 à 10 % en poids de la phase dispersée, de préférence entre 1 et 4 % en poids par rapport à la même référence.

La phase dispersée de l'émulsion; peut en outre comprendre au moins une matière active soluble (matière active hydrophobe).

Plus particulièrement, la ou les matières actives sont choisies parmi les matières actives utilisables dans le domaine du traitement de la peau et/ou du cheveu. Parmi elles figurent notamment, seules ou en mélanges :
- les vitamines lipophiles, comme la vitamine A et ses dérivés notamment ses esters comme l'acétate, le palmitate, le propionate, la vitamine B2, l'acide pantothénique, la vitamine D et la vitamine E ;
- les agents absorbeurs d'UV, comme les dérivés aminobenzoate de type PABA et PARA, les salicylates, les cinnamates, les anthranilates, les dibenzoylméthanes, les dérivés du camphre ; les agents anti-vieillissement comme notamment les rétinoïdes, les vitamines liposolubles, les dérivés de la vitamine C comme les esters du type de l'acétate, du propionate, du palmitate ; les céramides, les pseudo-céramides, les phospholipides, les acides gras, les alcools gras, le cholestérol, les stérols et leurs mélanges. Comme acides gras et alcools préférés, on peut plus particulièrement citer ceux possédant des chaînes alkyles, linéaires ou ramifiées contenant de 12 à 20 atomes de carbone. Il peut notamment s'agir d'acide linoléique ;
- les agents anti-cellulite, tels que notamment l'isobutylméthylxanthine et la théophyline ;
- les agents anti-acné, comme par exemple le résorcinol, l'acétate de résorcinol, le peroxyde de benzoyle et de nombreux composés naturels ; les bactéricides ;
- les agents anti-microbiens peuvent être choisis parmi le thymol, le menthol, le triclosan, le 4-hexylrésorcinol, le phénol, l'eucalyptol, l'acide benzoïque, le peroxyde benzoïque, le parabène de butyle ;
- les arômes, parfums, huiles essentielles telles que notamment les huiles essentielles/essences citées auparavant dans le cadre de la description de L2, mais aussi l'ambre gris, le benjoin, le clou de girofle, la civette, le jasmin, le bois de santal, le vétivert, le musk, la myrrhe, l'iris, ou encore les aldéhydes et esters comme par exemple l'acétate de cinnamyle, le cinnamaldéhyde, le p-méthylanisole, l'acétaldéhyde, le benzaldéhyde, la vanilline, le décanal, le nérol, le citral, le diméthyl-2,6 octanal, l'éthyl-2 butyraldéhyde.
- les agents fixants et/ou coiffants pour le cheveu comme par exemple les copolymères acétate de vinyle / crotonate / néodécanoate de vinyle, commercialisés sous la dénomination Resyn® 28-2942 et Resyn® 28-2930 de National Starch.

Au cas où la phase dispersée comprend une ou plusieurs matières actives hydrophobes, et au cas où la ou les matières actives ne sont pas utilisées aussi en tant que liquide L2, leur teneur représente plus particulièrement 10 à 50 % en poids de ladite phase dispersée (liquide L2).

Il est à noter que la phase dispersée elle-même peut être considérée comme matière active hydrophobe. Inversement, la ou les matières actives peuvent être considérées comme phase dispersée.

Un autre objet de l'invention est constitué par une dispersion de l'émulsion comprenant les liquides L1 et L2, dispersée dans une phase aqueuse externe (phase aqueuse externe continue).

Selon cet objet de l'invention, la phase aqueuse externe comprend au moins tensioactif non ionique et/ou au moins un polymère amphiphile non ionique, seuls ou en mélanges, éventuellement associé(s) à un ou plusieurs tensioactifs anioniques et/ou un ou plusieurs polymères amphiphiles anioniques.

De préférence, le tensioactif est choisi parmi les tensioactifs polyoxyalkylénés non ioniques, au moins miscibles en partie dans la phase aqueuse.

De manière avantageuse, le tensioactif polyoxyalkyléné de la phase aqueuse externe est choisi parmi les tensioactifs suivants, seuls ou en mélange : les alcools gras alcoxylés ; les triglycérides alcoxylés ; les acides gras alcoxylés ; les esters de sorbitan alcoxylés ; les amines grasses alcoxylées ; les di(phényl-1 éthyl) phénols alcoxylés ; les tri(phényl-1 éthyl) phénols alcoxylés ; les alkyls phénols alcoxylés ; le nombre de motifs alcoxylés, plus particulièrement oxyéthylénés et/ou oxypropylénés, est tel que la valeur de HLB soit supérieure ou égale à 10.

Pour ce qui a trait aux polymères amphiphiles non ioniques ou anioniques, on met en oeuvre un polymère comprenant au moins deux blocs, l'un d'eux étant hydrophile, l'autre hydrophobe. Ce qui a été indiqué auparavant dans le cadre de la description des monomères hydrophiles non ioniques, ioniques et ceux hydrophobes utilisables pour la préparation des copolymères peignes ou à blocs.

Lesdits polymères amphiphiles peuvent de manière avantageuse, être obtenus par polymérisation radicalaire dite vivante ou contrôlée. A titre d'exemples non limitatifs de procédés de polymérisation dite vivante ou contrôlée, on peut notamment se référer aux demandes WO 98/58974, WO 00/75207 et WO 01/42312 (xanthate), WO 98/01478 (dithioesters), WO 99/03894 (nitroxydes) ; WO 99/31144 (dithiocarbamates), WO 02/26836 (dithiocarbazates) ; WO 02/10223 (dithiophosphoroesters), WO 96/30421 (polymérisation radicalaire par transfert d'atome - ATRP).

Les polymères amphiphiles peuvent aussi être obtenus par polymérisation anionique.

Ils peuvent de même être préparés en mettant en jeu des polymérisations par ouverture de cycle (notamment anionique), ou par modification chimique du polymère.

Plus particulièrement, en ce qui concerne le polymère amphiphile, de préférence polyoxyalkyléné, présent de la phase aqueuse externe, il peut être choisi parmi les polymères miscibles au moins en partie dans la phase aqueuse externe et de préférence parmi les copolymères triblocs polyéthylène glycol / polypropylène glycol / polyéthylène glycol.

Il est précisé que des polymères de type alcool polyvinylique ou triblocs polyacide acrylique/polyacrylate de butyle/polyacide acrylique peuvent être utilisés à cette fin.

La teneur en tensioactif non ionique et/ou en polymère amphiphile non ionique est de manière avantageuse comprise entre 0,5 et 10 % en poids par rapport au poids de l'émulsion (L2 dans L1), de préférence entre 1 et 5 % en poids de l'émulsion.

Parmi les tensioactifs anioniques que l'on peut associer avec au moins un tensioactif non ionique et/ou au moins un polymère non ionique, on peut citer entre autres, seuls ou en mélanges :
- les alkylesters sulfonates, par exemple de formule R-CH(SO₃M)-COOR', où R représente un radical alkyle en C₈-C₂₀, de préférence en C₁₀-C₁₆, R' un radical alkyle en C₁-C₆, de préférence en C₁-C₃ et M un cation alcalin (sodium, potassium, lithium), ammonium substitué ou non substitué (méthyl-, diméthyl-, triméthyl-, tétraméthylammonium, diméthylpipéridinium ...) ou dérivé d'une alcanolamine (monoéthanolamine, diéthanolamine, triéthanolamine ...). On peut citer tout particulièrement les méthyl ester sulfonates dont le radical R est en C₁₄-C₁₆ ; les alkylbenzènesulfonates, plus partiuclièrement en C₉-C₂₀, les alkylsulfonates primaires ou secondaires, notamment en C₈-C₂₂, les alkylglycérol sulfonates, les acides polycarboxyliques sulfonés, comme par exemple ceux décrits dans GB 1082179, les sulfonates de paraffine ;
- les alkylsulfates par exemple de formule ROSO₃M, où R représente un radical alkyle ou hydroayalkyle en C₁₀-C₂₄, de préférence en C₁₂-C₂₀ ; M représentant un atome d'hydrogène ou un cation de même définition que ci-dessus, ainsi que leurs dérivés polyalcoxylés (éthoxylés (OE), propoxylés (OP), ou leurs combinaisons), comme par exemple le dodécylsulfate de sodium ;
- les alkyléthersulfates par exemple de formule RO(CH₂CH₂O)ₙSO₃M où R représente un radical alkyle ou hydroxyalkyle en C₁₀-C₂₄, de préférence en C₁₂-C₂₀ ; M représentant un atome d'hydrogène ou un cation de même définition que ci-dessus, n variant généralement de 1 à 4, ainsi que leurs dérivés polyalcoxylés (éthoxylés (OE), propoxylés (OP), ou leurs combinaisons), comme par exemple le laurylethersulfate avec n = 2.
- les alkylamides sulfates, par exemple de formule RCONHR'OSO₃M où R représente un radical alkyle en C₂-C₂₂, de préférence en C₆-C₂₀, R' un radical alkyle en C₂-C₃, M représentant un atome d'hydrogène ou un cation de même définition que ci-dessus, ainsi que leurs dérivés polyalcoxylés (éthoxylés (OE), propoxylés (OP), ou leurs combinaisons) ;
- les sels d'acides gras saturés ou insaturés, par exemple comme ceux en C₈-C₂₄, de préférence en C₁₄-C₂₀, les N-acyl N-alkyltaurates, les alkyliséthionates, les alkylsuccinamates et alkylsulfosuccinates, les monoesters ou diesters de sulfosuccinates, les N-acyl sarcosinates, les polyéthoxycarboxylates ; et
- les phosphates esters d'alkyle et/ou d'alkyléther et/ou d'alkylaryléther.

De préférence, la teneur en tensioactif anionique, s'il est utilisé, est comprise entre 0,5 et 5% en en poids par rapport au poids de l'émulsion, de manière avantageuse comprise entre 0,5 et 2 % en poids par rapport à la même référence.

Plus particulièrement, le rapport pondéral d'émulsion par rapport à la phase aqueuse externe est compris entre 30/70 et 90/10, de préférence compris entre 50/50 et 90/10.

Selon une variante de l'invention, la dispersion comprend au moins un agent épaississant. Plus particulièrement, ledit agent épaississant se trouve dans la phase aqueuse externe continue.

L'agent épaississant est choisi de préférence parmi les polysaccharides comme la gomme xanthane, le guar, seuls ou en mélanges.

En outre, la teneur agent épaississant est de manière avantageuse, comprise entre 0,1 et 2 % en poids de la dispersion (émulsion et phase aqueuse externe continue).

Selon les cas, il peut être avantageux d'incorporer dans la phase aqueuse externe continue, au moins un sel et/ou un sucre et/ou un polysaccharide. Ainsi, dans le cas où la dispersion selon l'invention (émulsion et phase aqueuse externe) est mélangée à une émulsion multiple du type eau/huile/eau, il peut être nécessaire d'équilibrer les pressions osmotiques de la phase aqueuse externe de la dispersion selon l'invention (qui sera alors la même que la phase aqueuse externe de l'émulsion multiple) et de la phase aqueuse interne de l'émulsion multiple.

Par conséquent, et si nécessaire, la phase aqueuse externe continue de la dispersion selon l'invention peut comprendre au moins un sel choisi parmi les halogénures de métaux alcalins ou alcalino-terreux, ou les sulfates de métaux alcalin ou alcalino-terreux, ou leurs mélange ; la concentration en sel dans la phase aqueuse externe continue étant comprise entre 0,05 et 1 mol/l, de préférence 0,1 à 0,4 mol/l.

La phase aqueuse externe continue peut aussi comprendre au moins un sucre, ou au moins un polysaccharide, ou leurs mélanges ; la concentration en sucre et/ou polysaccharide étant telle que la pression osmotique de la phase aqueuse externe continue comprenant le sucre et/ou polysaccharide correspond à la pression osmotique d'une phase aqueuse externe continue comprenant 0,05 à 1 mol/l de sel.

Un autre objet de l'invention est constitué d'une dispersion de l'émulsion selon l'invention dans une phase organique externe continue.

Plus précisément, l'émulsion selon l'invention est dispersée dans une phase organique externe non miscible avec la phase continue de ladite émulsion.

En ce qui concerne la nature de la phase organique continue dans laquelle l'émulsion selon l'invention est dispersée, celle-ci peut être choisie parmi les composés listés précédemment dans le cadre de la description du liquide L2 de l'émulsion. Cette phase organique externe continue peut être de même nature chimique que celle de la phase dispersée de l'émulsion selon l'invention, ou non.

En outre, la phase organique externe continue comprend un agent stabilisant. Avantageusement, cet agent stabilisant est choisi parmi les copolymères peigne ou à blocs, dont une fraction est soluble dans la phase dispersée (en d'autres termes, la phase continue de l'émulsion selon l'invention), l'autre dans la phase organique externe continue, la fraction soluble dans la phase organique externe continue étant supérieure à la fraction soluble dans la phase dispersée.

Tout ce qui a été décrit précédemment concernant le copolymère mis en oeuvre pour la stabilisation de l'émulsion selon l'invention (L2/L1), pourra être repris dans le cas de l'agent stabilisant l'émulsion dispersée dans une phase organique externe continue, à la condition que la fraction la plus importante du polymère est celle soluble dans la phase organique externe continue, de nature différente de celle formant la phase continue de l'émulsion selon l'invention.

Enfin, le rapport pondéral d'émulsion (L2/L1) par rapport à la phase organique externe continue est, selon une variante, compris entre 30/70 et 90/10, de préférence compris entre 50/50 et 90/10.

Un procédé d'obtention de l'émulsion selon l'invention va maintenant être décrit, qui consiste à préparer, d'une part un premier mélange comprenant la phase dispersée comprenant éventuellement la matière active, et d'autre part, un deuxième mélange comprenant la phase continue et le polymère ; puis à ajouter le premier mélange au second, sous agitation.

Dans le cas où la phase continue est peu visqueuse (viscosité inférieure à 1 Pa.s) l'agitation est de préférence forte et peut être, de manière avantageuse, apportée par l'utilisation d'un appareil du type Ultra-Turrax^{®}, Microfluidizer, ou tout homogénéisateur haute pression.

Dans le cas où la phase continue est visqueuse (viscosité supérieure ou égale à 1 Pa.s, de préférence supérieure ou égale à 5 Pa.s), l'agitation peut être avantageusement effectuée au moyen d'une pale-cadre.

La préparation de l'émulsion est en général réalisée à une température comprise entre 20 et 80°C.

La durée de l'agitation peut être déterminée sans difficulté par l'homme de l'art et dépend du type d'appareillage mis en oeuvre. Elle est de préférence suffisante pour obtenir une taille moyenne de gouttelettes comprise entre 0,1 et 10 µm, de préférence entre 0,1 et 5 µm (mesurée au moyen d'un granulomètre Horiba).

En ce qui concerne un procédé de préparation de la dispersion de l'émulsion dans une phase aqueuse externe continue, on prépare un mélange de la phase aqueuse externe continue comprenant le tensioactif et/ou le polymère amphiphile non ionique et éventuellement le tensioactif anionique, auquel on ajoute l'émulsion selon l'invention, puis on ajoute éventuellement une solution aqueuse d'épaississant à l'émulsion ainsi obtenue.

Selon la variante où la dispersion de l'émulsion dans la phase aqueuse externe continue est mélangée à une émulsion multiple eau/huile/eau, on ajuste de manière préférée, les pressions osmotiques de la phase aqueuse externe continue et de la phase aqueuse interne de l'émulsion multiple. Ceci est réalisé notamment en introduisant à la dispersion selon l'invention, le sel et/ou sucre et/ou polysaccharide, sous la forme d'une solution aqueuse, après ou avec l'ajout de l'agent épaississant à la dispersion.

Pour ce qui a trait à la préparation de la dispersion de l'émulsion dans une phase organique continue externe continue, on prépare un mélange de la phase organique comprenant l'agent stabilisant, auquel on ajoute l'émulsion selon l'invention.

La préparation de la dispersion dispersée, quelle que soit la variante, a lieu de préférence sous agitation, en ajoutant au départ l'émulsion lentement.

L'agitation peut être faite au moyen d'une pale cadre. Typiquement, la vitesse d'agitation est relativement lente, de l'ordre de 400 tr/minute.

L'émulsion selon l'invention, la dispersion de l'émulsion dans une phase aqueuse externe continue, la dispersion de l'émulsion dans une phase organique externe continue, peuvent être utilisées dans le domaine du traitement de la peau et/ou des cheveux, plus particulièrement en tant qu'additifs de telles formulations.

La teneur en émulsion ou en dispersion, est de préférence telle que la teneur en matière(s) active(s) dans la formulation cosmétique ou dermatologique est comprise entre 0,01 et 50 % en poids de ladite formulation.

Les compositions cosmétiques faisant l'objet de l'invention peuvent être formulées en un grand nombre de types de produits pour la peau, le cheveu, les cils et/ou les ongles, les shampoings pour cheveux ou pour le corps, les gels de nettoyage du visage ou du corps, les savons liquides, les compositions moussantes pour le bain, les conditionneurs, les formulations pour te coiffage ou pour faciliter le peignage des cheveux, les lotions pour les mains et le corps, les produits régulant l'hydratation de la peau, les laits de toilette, les compositions démaquillantes, les produits dépilatoires, les crèmes ou lotions de protection contre le soleil et les rayonnements ultraviolets, les crèmes de soin, les préparations anti-acné, les formulations maquillage de type mascaras, fonds de teint, vernis à ongles, les produits destinés à être appliqués sur les lèvres, etc.

Les formulations cosmétiques, en plus de l'émulsion ou de la dispersion selon l'invention, comprend des additifs classiques dans le domaine.

Ainsi, les formulations peuvent comprendre des tensioactifs dont la teneur peut varier entre environ 3-40% en poids par rapport à la formulation.

Parmi les agents tensioactifs convenables, on peut citer à titre de tensioactif anioniques: les alkylesters sulfonates, les alkylbenzènesulfonates, les alkylsulfonates primaires ou secondaires, les alkylglycérol sulfonates, les acides polycarboxyliques sulfonés, les sulfonates de paraffine ; les alkylsulfates ; les alkyléthersulfates ; les alkylamides sulfates ; les sels d'acides gras saturés ou insaturés, les N-acyl N-alkyltaurates, les alkyliséthionates, les alkylsuccinamates et alkylsulfosuccinates, les monoesters ou diesters de sulfosuccinates, les N-acyl sarcosinates, les polyéthoxycarboxylates ; et les phosphates esters d'alkyle et/ou d'alkyléther et/ou d'alkylaryléther; seuls ou en mélange.

Parmi les tensioactifs non ioniques pouvant être utilisés dans les formulations, conviennent : les alcools gras alcoxylés ; les triglycérides alcoxylés ; les acides gras alcoxylés ; les esters de sorbitan alcoxylés ; les amines grasses alcoxylées ; les di(phényl-1 éthyl) phénols alcoxylés ; les tri(phényl-1 éthyl) phénols alcoxylés ; les alkyls phénols alcoxylés ; les produits résultant de la condensation de l'oxyde d'éthylène avec un composé hydrophobe résultant de la condensation de l'oxyde de propylène avec le propylène glycol, tels les Pluronic commercialisés par BASF ; les produits résultant de la condensation de l'oxyde d'éthylène le composé résultant de la condensation de l'oxyde de propylène avec l'éthylènediamine, tels les Tetronic commercialisés par BASF ; les alkylpolyglycosides comme ceux décrits dans US 4565647 ; les amides d'acides gras par exemple en C₈-C₂₀ ; seuls ou en mélange.

Les formulations peuvent de même comprendre des tensioactifs cationiques comme les halogénures d'alkyldiméthylammonium, ou encore des tensioactifs amphotères ou zwitterioniques, comme par exemple les bétaïnes, par exemple la lauryl bétaïne (Mirataine BB de la société Rhodia Chimie) ; les sulfo-bétaïnes ; les amidoalkylbétaïnes, comme la cocamidopropyl bétaïne (Mirataine BDJ de la société Rhodia Chimie) ; les sultaines comme la cocamidopropyl hydroxy sultaïne (Mirataine CBS de la société Rhodia Chimie) ; les alkylamphoacétates et alkylamphodiacétates, comme par exemple comprenant une chaîne coco, lauryle (Miranol C2M, C32 notamment, de la société Rhodia Chimie) ; les alkylamphopropionates ou les alkylamphodipropionates, (Miranol C2M SF); les alkyl amphohydroxypropyl sultaïnes (Miranol CS).

On peut ainsi incorporer dans la composition cosmétique, sous forme de dispersions ou de solutions, des agents bactéricides ou fongicides afin d'améliorer la désinfection de la peau, comme par exemple le triclosan; des agents anti-pelliculaires, comme notamment le zinc pyrithione ou l'octopyrox ; des agents insecticides comme les pyréthroïdes naturels ou de synthèse.

Les compositions cosmétiques peuvent également contenir des agents pour la protection de la peau et/ou des cheveux contre les agressions du soleil et des rayons UV. Ainsi, les compositions peuvent comprendre des filtres solaires qui sont des composés chimiques absorbant fortement le rayonnement UV, comme les composés autorisés dans la directive européenne N° 76/768/CEE, ses annexes et les modifications ultérieures de cette directive.

Les compositions cosmétiques peuvent également contenir des résines fixatives.

Ces résines fixatives, lorsqu'elles sont présentes, le sont généralement à des concentrations comprises entre 0,01 et 10%, préférentiellement entre 0,5 et 5%.

Les résines fixatives entrant dans les compositions cosmétiques sont plus particulièrement choisies parmi les résines suivantes :
- les copolymères acrylate de méthyle / acrylamide, copolymères polyvinylméthyléther / anhydride maléique, copolymères acétate de vinyle / acide crotonique, copolymères octylacrylamide / acrylate de méthyle / butylaminoéthylméthacrylate, polyvinylpyrrolidones, copolymères polyvinylpyrrolidone / méthacrylate de méthyle, copolymères polyvinylpyrrolidone / acétate de vinyle, alcools polyvinyliques, copolymères alcool polyvinylique / acide crotonique, copolymères alcool polyvinylique / anhydride maléique, hydroxypropyl celluloses, hydroxypropyl guars, polystyrène sulfonates de sodium, terpolymères polyvinylpyrrolidone / éthyl méthacrylate/ acide méthacrylique, monométhyl éthers de poly(méthylvinyl éther / acide maléique), polyvinylacétates greffés sur des troncs polyoxyéthylènes (EP 219048),
- les copolyesters dérivés d'acide, anhydride ou d'un diester téréphtalique et/ou isophtalique et/ou sulfoisophtalique et d'un diol, tels que :
   - les copolymères polyesters à base de motifs ethylène téréphtalate et/ou propylène téréphtalate et polyoxyéthylène téréphtalate, (US 3959230, US 3893929, US 4116896, US 4702857, US 4770666) ;
   - les oligomères polyesters sulfonés obtenus par sulfonation d'un oligomère dérivé de l'alcool allylique éthoxylé, du diméthyltéréphtalate et du 1,2 propylène diol (US 4968451);
   - les copolymères polyesters dérivés de diméthyltéréphtalate, d'acide isophtalique, de sulfoisophtalate de diméthyl et d'éthylène glycol (EP 540374)
   - les copolymères comprenant des unités polyesters dérivés de diméthyltéréphtalate, d'acide isophtalique, de sulfoisophtalate de diméthyl et d'éthylène glycol et d'unités polyorganosiloxanes (FR 2728915).
   - les oligomères polyesters sulfonés obtenus par condensation de l'acide isophtalique, du sulfosuccinate de diméthyle et de diéthylène glycol (FR 2236926)
   - les copolymères polyesters à base de motifs propylène téréphtalate et polyoxyéthylène téréphtalate et terminés par des motifs éthyles, méthyles (US 4711730) ou des oligomères polyesters terminés par des groupes alkylpolyéthoxy (US 4702857) ou des groupes anioniques sulfopolyéthoxy (US 4721580), sulfoaroyles (US 4877896) ;
   - les polyesters-polyuréthanes plus particulièrement obtenus par réaction d'un polyester obtenu à partir d'acide adipique et/ou d'acide téréphtalique et/ou d'acide sulfoisophtalique et d'un diol, sur un prépolymère à groupements isocyanates terminaux obtenus à partir d'un polyoxyéthylène glycol et d'un diisocyanate (FR 2334698) ;
- les monoamines ou polyamines éthoxylées, les polymères d'amines éthoxylées (US 4597898, EP 11984).

De manière préférentielle, les résines fixatives sont choisies parmi les polyvinylpyrrolidone (PVP), copolymères de polyvinylpyrrolidone et de méthyl méthacrylate, copolymère de polyvinylpyrrolidone et d'acétate de vinyle (VA), copolymères polytéréphtale d'éthylène glycol / polyéthylène glycol, copolymères polytéréphtalate d'éthylène glycol / polyéthylène glycol / polyisophtalate sulfonate de sodium, et leurs mélanges.

Ces résines fixatives sont préférentiellement dispersées ou solubilisées dans le véhicule choisi.

Les compositions cosmétiques peuvent également contenir des dérivés polymériques exerçant une fonction protectrice.

Ces dérivés polymériques peuvent être présents en quantités de l'ordre de 0,01 - 10%, de préférence environ 0,1-5%, et tout particulièrement de l'ordre de 0,2-3% en poids.

Ces agents peuvent notamment être choisis parmi :
- les dérivés cellulosiques non ioniques tels que les hydroxyéthers de cellulose, la méthylcellulose, l'éthylcellulose, l'hydroxypropyl méthylcellulose, l'hydroxybutyl méthylcellulose ;
- les polyvinylesters greffés sur des troncs polyalkylénés tels que les polyvinylacétates greffés sur des troncs polyoxyéthylènes (EP 219048) ;
- les alcools polyvinyliques.

Les compositions cosmétiques peuvent aussi comprendre des agents plastifiants.

Lesdits agents, s'ils sont présents, peuvent représenter entre 0,1 à 20% de la formulation de préférence de 1 à 15%.

Parmi les agents plastifiants particulièrement utiles, on peut citer les adipates, les phtalates, les isophtalates, les azélates, les stéarates, les silicones copolyols, les glycols, l'huile de ricin, ou leurs mélanges.

On peut aussi avantageusement ajouter à ces compositions des agents séquestrants des métaux, plus particulièrement ceux séquestrant le calcium comme les ions citrates.

On peut également incorporer aux compositions cosmétiques des agents humectants, parmi lesquels figurent, entre autres, le glycérol, le sorbitol, l'urée, le collagène, la gélatine, l'aloe vera, l'acide hyaluronique ou des solvants volatils hydrosolubles comme l'éthanol ou le propylène glycol dont les teneurs peuvent atteindre jusqu'à 60% en poids de la composition.

Pour diminuer encore l'irritation ou l'agression du cuir chevelu, on peut aussi ajouter des polymères hydrosolubles ou hydrodispersables comme le collagène ou certains dérivés non allergisants de protéines animales ou végétales (hydrolysats de protéines de blé par exemple), des hydrocolloïdes naturels (gomme de guar, de caroube, de tara, ...) ou issus de procédés de fermentation et les dérivés de ces polycarbohydrates comme les celluloses modifiées non ioniques comme par exemple l'hydroxyéthylcellulose, ou anionique comme la carboxyméthylcellulose ; les dérivés du guar ou de la caroube comme leurs dérivés non-ioniques (par exemple hydroxypropylguar) ou les dérivés anioniques (carboxyméthylguar et carboxyméthylhydroxypropylguar).

A ces composés, on peut ajouter en association, des poudres ou des particules minérales comme du carbonate de calcium, du bicarbonate de sodium, du dihydrogénophosphate de calcium, des oxydes minéraux sous forme de poudre ou sous forme colloïdale (particules de taille inférieure ou de l'ordre de un micromètre, parfois de quelque dizaines de nanomètres) comme du dioxyde de titane, de la silice, des sels d'aluminium utilisés généralement comme anti-transpirants, du kaolin, du talc, des argiles et leurs dérivés, etc..

Des agents conservateurs comme les méthyl, éthyl, propyl et butyl esters de l'acide p-hydroxybenzoïque, le benzoate de sodium, le GERMABEN^{®} ou tout agent chimique évitant la prolifération des bactéries ou des moisissures et utilisé traditionnellement des les compositions cosmétiques, peuvent aussi être introduits dans les compositions aqueuses cosmétiques selon l'invention, généralement à hauteur de 0,01 à 3 % en poids.

La quantité de ces produits est habituellement ajustée pour éviter toute prolifération de bactéries, moisissures ou levures dans les compositions cosmétiques.

Alternativement à ces agents chimiques, on peut parfois utiliser des agents modifiant l'activité de l'eau et augmentant fortement la pression osmotique comme les carbohydrates ou des sels.

Pour protéger la peau et/ou les cheveux des agressions du soleil et des rayons UV, on peut ajouter à ces formulations des particules minérales comme l'oxyde de zinc, le dioxyde de titane ou les oxydes de cérium sous forme de poudre ou de particules colloïdales, seuls ou en mélange. Ces poudres peuvent éventuellement être traitées en surface pour augmenter l'efficacité de leur action anti-UV ou pour faciliter leur incorporation dans les formulations cosmétiques ou pour inhiber la photoréactivité de surface.

A ces ingrédients on peut ajouter, si nécessaire, et dans le but d'augmenter le confort lors de l'utilisation de la composition par le consommateur, un ou des parfums, des agents colorants parmi lesquels on peut citer les produits décrits dans l'annexe IV ("List of colouring agents allowed for use in cosmetic products") de la directive européenne n° 76/768/CEE du 27 juillet 1976 dite directive cosmétique, et/ou des agents opacifiants comme des pigments.

Bien que cela ne soit pas obligatoire, la composition peut aussi contenir des polymères viscosants ou gélifiants de façon à ajuster la texture de la composition, comme les polyacrylates réticulés (Carbopol commercialisés par Goodrich), les dérivés non cationiques de la cellulose comme l'hydroxypropylcellulose, la carboxyméthylcellulose, les guars et leurs dérivés non ioniques, la gomme xanthane et ses dérivés, utilisés seuls ou en association, ou les mêmes composés, généralement sous la forme de polymères hydrosolubles modifiés par des groupements hydrophobes liés de manière covalente au squelette polymère comme décrit dans la demande internationale WO 92/16187 et/ou de l'eau pour amener le total des constituants de la formulation à 100 %.

Les compositions cosmétiques peuvent également contenir des agents dispersants polymériques en quantité de l'ordre de 0,1-7% en poids, pour contrôler la dureté en calcium et magnésium, agents tels que :
- les sels hydrosolubles d'acides polycarboxyliques de masse moléculaire en poids de l'ordre de 2000 à 100000 g/mol, obtenus par polymérisation ou copolymérisation d'acides carboxyliques éthyléniquement insaturés tels que l'acide acrylique, l'acide ou l'anhydride maléique, l'acide fumarique, l'acide itaconique, l'acide aconitique, l'acide mésaconique, l'acide citraconique, l'acide méthylènemalonique, et tout particulièrement les polyacrylates de masse moléculaire en poids de l'ordre de 2 000 à 10 000 g/mol (US 3308067), les copolymères d'acide acrylique et d'anhydride maléique de masse moléculaire en poids de l'ordre de 5000 à 75 000 g/mol (EP 66915) ;
- les polyéthylèneglycols par exemple de masse moléculaire en poids de l'ordre de 1000 à 50000 g/mol.

Des exemples concrets mais non limitatifs de l'invention vont maintenant être décrits.

### Exemple 1

Cet exemple a pour objet la synthèse d'un copolymère tribloc Polyacrylate de butyle 2500 - Polydiméthylsiloxane 14000- Polyacrylate de butyle 2500

### 1a. Préparation de l'huile PDMS alpha, oméga-bis(xanthate)

100 g d'huile silicone alpha,oméga-carbinol contenant 193 motifs diméthylsiloxane (analyse RMN ¹H) est mise en solution dans 500 ml de cyclohexane en présence de 4 équivalents molaire de triéthylamine NEt₃.

Via une canule, sont introduits 2,4 équivalents de bromure de 2-bromopropionyle en solution dans 100 ml de cyclohexane.

Un précipité blanc se forme tout de suite avec une légère augmentation de la température du milieu réactionnel.

La phase aqueuse est ensuite séparée de la phase organique. Le cyclohexane est ensuite évaporé.

Le produit brut obtenu est ensuite filtré sur une couche de silice. Après évaporation des solvants, 102 g (84% de rendement) de produit d'acylation sont obtenus.

### 1b. Synthèse de copolymère tribloc Polyacrylate de butyle 2500 - Polydiméthylsiloxane 14000- Polyacrylate de butyle 2500

0,0352g d'azobisisobutyronitrile sont introduits dans un réacteur en verre, en même temps que 4 g d'huile PDMS décrite dans l'exemple 1a, 1,342 g d'acrylate de butyle et 12,548 g de cyclohexane.

Le mélange est chauffé à 70°C pendant 7 heures.

Le solvant est ensuite évaporé.

Les résultats suivants sont obtenus : Mₙ = 13 800 g/mol M_{w}/Mₙ = 1,98

### Exemple 2

Cet exemple a pour objet l'obtention d'une émulsion huile silicone (L1) / huile végétale (L2) à 50/50.

On prépare un mélange comprenant le copolymère obtenu à l'issue de l'exemple précédent dans une huile silicone (Mirasil DM 300, commercialisée par Rhodia Chimie).

Les teneurs respectives en ces composés sont telles que l'émulsion finale huile silicone (L1) / huile végétale (L2) comprend 2,5% en poids de copolymère et 45,5 % en silicone ; ces pourcentages sont exprimés par rapport au poids total de l'émulsion L2/L1.

Le mélange est obtenu en agitant à la pale-cadre.

On obtient une solution.

Puis on verse goutte à goutte l'huile végétale (huile de tournesol, commercialisée par la société Bertin, Lagny-le-Sec, France) sur la solution précédemment obtenue, avec une agitation à la pale cadre de l'ordre de 600 tr/minute. Puis on poursuit l'agitation à l'ultraturrax (9500 tour/minute environ) pendant trois minutes.

On obtient une émulsion stable.

### Exemple 3

Cet exemple a pour objet l'obtention d'une dispersion de l'émulsion ainsi obtenue dans une phase aqueuse (teneur en émulsion 80% en poids / teneur en phase aqueuse 20 % en poids).

On prépare une solution aqueuse d'Arlatone F127G (*) (ICI - Uniquema) à 10 % en poids.
(*) Arlatone F127G : HO(CH₂CH₂O)ₓ(OCH(CH₃)CH₂O)_{y}(CH₂CH₂O)_{z}H avec vérification de l'inéquation suivante : 82<x+z<90 et le polymère comprend 7 motifs OP pour 1 mole de produit).

On ajoute ensuite à cette solution, lentement et en continu, l'émulsion obtenue selon l'exemple 2, sous une agitation à la pale cadre de 300 tr/minute, pendant environ trois à cinq minutes.

La dispersion concentrée ainsi obtenue est stable.

### Exemple 4

Cet exemple a pour objet l'obtention d'une dispersion diluée de l'émulsion ainsi obtenue dans une phase aqueuse (teneur en émulsion 50% en poids / teneur en phase aqueuse 50 % en poids).

On prépare une solution de Rhodopol 23 (gomme xanthane ; Rhodia Chimie) à 2 % en poids.

Puis on ajoute à la spatule, cette solution dans la dispersion obtenue à l'exemple 3, pour atteindre une concentration finale en Rhodopol 23 de 0,5% par rapport au poids total de la dispersion finale.

La dispersion ainsi obtenue est stable.

### Exemple 5

Cet exemple a pour objet l'obtention d'une émulsion éthanol / huile silicone / eau.

### Préparation de l'émulsion éthanol / huile silicone (80/20)

Le copolymère mis en oeuvre est un copolymère tribloc Polyacrylate de butyle 3000 - Polydiméthylsiloxane 35000- Polyacrylate de butyle 3000. Il est obtenu conformément au procédé décrit à l'exemple 1, excepté le fait que l'huile silicone alpha,oméga-carbinol comprend 422 motifs diméthylsiloxane (analyse RMN ¹H) et que les teneurs en acrylate de butyle utilisées sont adaptées de manière à obtenir des blocs polyacrylate de butyle de 3000.

Tout d'abord, à 1 g d'huile silicone (Rhodorsil 47V1000 ; commercialisée par Rhodia Chimie) est ajouté 1 g du copolymère précité. Puis le mélange est placé à 5°C et homogénéisé à 400 tr/min à la pale cadre pleine.

Puis on ajoute 8 g d'une solution dans l'éthanol de résine (Resyn 28-2930, commercialisée par National Starch ; solution de résine à 40 % neutralisée à 90% par ajout de 2-Amino-2-méthyl-1-propanol à 95%, Aldrich), goutte à goutte, dans la phase siliconée. En fin d'ajout, le cisaillement est maintenu à 400 tr/min pendant 20 minutes pour affinage.

On obtient une émulsion stable.

### Préparation de la dispersion [éthanol / huile silicone] / eau (91/9)

La phase aqueuse externe se compose d'une solution d'Arlatone F127G à 10% dans l'eau.

On introduit dans 4g d'émulsion obtenue précédemment, 0,4g de solution d'Arlatone F127G à 10%.

L'ensemble est homogénéisé (homogéniseur Eurostar IKA, Labortechnik, Junke & Junkel ; équipé de la pale cadre pleine, vitesse augmentée jusqu'à 400 tr/min). Lorsque l'ensemble semble homogène, l'agitation pendant 5 minutes environ.

On obtient une émulsion stable.

## Revendications

1. Emulsion comprenant deux liquides non aqueux, L1 et L2, non miscibles entre eux, **caractérisée en ce que**:
- le liquide L1 est une silicone et représente la phase continue de l'émulsion
- l'émulsion est stabilisée par au moins un copolymère à blocs,
une fraction du copolymère selon la règle de Bancroft étant soluble dans la phase dispersée, une autre fraction selon la règle de Bancroft étant soluble dans la phase continue, la fraction soluble dans la phase continue étant supérieure à la fraction soluble dans la phase dispersée.

2. Emulsion selon la revendication précédente, **caractérisée en ce que** le liquide L1 est choisi parmi des silicones, seules ou en mélange, constituées en tout ou partie de motifs de formule :
R'₃₋ₐRₐSiO_{½} (motif M) et/ou R₂SiO (motif D)
formules où :
- a est un entier de 0 à 3 ;
- les radicaux R sont identiques ou différents et représentent :
- un groupe hydrocarboné aliphatique saturé ou insaturé contenant de 1 à 10 atomes de carbone ;
- un groupe hydrocarboné aromatique contenant de 6 à 13 atomes de carbone ;
- un groupe organique polaire lié au silicium par une liaison Si-C ou Si-O-C ;
- les radicaux R' sont identiques ou différents et représentent :
- un groupe hydrocarboné aliphatique saturé ou insaturé contenant de 1 à 10 atomes de carbone ;
- un groupe hydrocarboné aromatique contenant de 6 à 13 atomes de carbone ;
- une fonction -OH ;
- un groupe amino ou amido contenant de 1 à 6 atomes de carbone, lié au silicium par une liaison Si-N.

3. Emulsion selon l'une des revendications précédentes, **caractérisée en ce que** le liquide L2 est choisi parmi :
- les huiles/graisses/cires organiques d'origine animale ou d'origine végétale ;
- les huiles/cires minérales ;
- les produits issus de l'alcoolyse des huiles précitées ;
- les huiles essentielles ;
- les mono-, di- et tri- glycérides ;
- les acides gras, saturé ou non, comprenant 10 à 40 atomes de carbone ; les esters de tels acides et d'alcool comprenant 1 à 6 atomes de carbone ;
- les monoalcools, saturés ou non, comprenant 2 à 40 atomes de carbone ;
- les polyols comprenant 2 et 10 atomes de carbone ;
ces composés étant utilisés seuls ou en mélange.

4. Emulsion selon l'une des revendications précédentes, **caractérisée en ce que** la proportion pondérale en liquide L2 par rapport au liquide L1, est comprise entre 10/90 et 90/10, de préférence comprise entre 30/70 et 50/50.

5. Emulsion selon l'une des revendications précédentes, **caractérisée en ce que** le bloc soluble dans L1 du copolymère à blocs, dérive d'un polysiloxane choisi parmi les silicones selon la revendication 2, de préférence, ledit polysiloxane est porteur de fonctions réactives.

6. Emulsion selon l'une des revendications précédentes, **caractérisée en ce que** le bloc soluble dans L2 du copolymère à blocs, dérive de la polymérisation d'au moins un monomère choisi parmi les monomères suivants :
- les esters des acides mono- ou poly- carboxyliques, linéaires, ramifiés, cycliques ou aromatiques, comprenant au moins une insaturation éthylénique,
- les nitriles αβ-éthyléniquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique,
seuls ou en mélanges, ainsi que les macromonomères dérivant de tels monomères.

7. Emulsion selon l'une des revendications précédentes, **caractérisée en ce que** le copolymère est un copolymère comprenant au moins trois blocs.

8. Emulsion selon l'une des revendications précédentes, **caractérisée en ce que** la quantité de copolymère représente de 0,5 à 10 % en poids de la phase dispersée.

9. Emulsion selon l'une des revendications précédentes, **caractérisée en ce que** la phase dispersée comprend au moins une matière active soluble dans ladite phase dispersée.

10. Emulsion selon la revendication précédente, **caractérisée en ce que** la matière active est choisie parmi les matière actives suivantes, utilisables dans le domaine du traitement de la peau et/ou du cheveu :
- les vitamines lipophiles ;
- les agents absorbeurs d'UV ; les agents anti-vieillissement ;
- les agents anti-cellulite ;
- les agents anti-acné ;
- les agents anti-microbiens ; les bactéricides ;
- les arômes ; huiles essentielles ; parfums ;
- les agents coiffants et/ou fixants pour le cheveu;
seules ou en mélanges.

11. Emulsion selon la revendication précédente, **caractérisée en ce que** la teneur en matière(s) active(s) hydrophobe(s) représente 10 à 50 % en poids de la phase dispersée.

12. Dispersion, **caractérisée en ce qu'**elle comprend l'émulsion selon l'une des revendications 1 à 11 dispersée dans une phase aqueuse externe continue comprenant au moins tensioactif non ionique et/ou au moins un polymère amphiphile non ionique, éventuellement associé(s) à un ou plusieurs tensioactifs anioniques et/ou polymères amphiphiles anioniques.

13. Dispersion selon la revendication précédente, **caractérisée en ce que** le tensioactif non ionique, de préférence polyoxyalkyléné, au moins miscible en partie dans la phase aqueuse externe est choisi parmi l'un au moins des tensioactifs suivants:
- les alcools gras alcoxylés
- les triglycérides alcoxylés
- les acides gras alcoxylés
- les esters de sorbitan alcoxylés
- les amines grasses alcoxylées
- les di(phényl-1 éthyl) phénols alcoxylés
- les tri(phényl-1 éthyl) phénols alcoxylés
- les alkyls phénols alcoxylés le nombre de motifs alcoxylés, plus particulièrement oxyéthylénés et/ou oxypropylénés, est tel que la valeur de HLB soit supérieure ou égale à 10.

14. Dispersion selon l'une des revendications 12 ou 13, **caractérisée en ce que** le polymère amphiphile de la phase aqueuse externe est choisi parmi les polymères miscibles au moins en partie dans la phase aqueuse externe et de préférence parmi les copolymères triblocs polyéthylène glycol / polypropylène glycol / polyéthylène glycol.

15. Dispersion selon l'une des revendications 12 à 14, **caractérisée en ce que** la teneur en tensioactif non ionique et/ou en polymère amphiphile non ionique est comprise entre 0,5 et 10 % en poids par rapport au poids de l'émulsion, de préférence entre 1 et 5 % en poids de l'émulsion.

16. Dispersion selon l'une des revendications 12 à 15, **caractérisé en ce que** le tensioactif anionique est choisi parmi l'un au moins des tensioactifs suivants :
- les alkylesters sulfonates, les alkylbenzènesulfonates, les alkylsulfonates primaires ou secondaires, les alkylglycérol sulfonates, les acides polycarboxyliques sulfonés, les sulfonates de paraffine ;
- les alkylsulfates ;
- les alkyléthersulfates ;
- les alkylamides sulfates ;
- les sels d'acides gras saturés ou insaturés, les N-acyl N-alkyltaurates, les alkyliséthionates, les alkylsuccinamates et alkylsulfosuccinates, les monoesters ou diesters de sulfosuccinates, les N-acyl sarcosinates, les polyéthoxycarboxylates ; et
- les phosphates esters d'alkyle et/ou d'alkyléther et/ou d'alkylaryléther,
seuls ou en mélange.

17. Dispersion selon la revendication précédente, **caractérisé en ce que** la teneur en tensioactif anionique est comprise entre 0,5 et 5% en poids par rapport au poids de l'émulsion, de préférence comprise entre 0,5 et 2 % en poids par rapport à la même référence.

18. Dispersion selon l'une des revendications 12 à 17, **caractérisée en ce que** le rapport pondéral d'émulsion par rapport à la phase aqueuse externe continue est compris entre 30/70 et 90/10, de préférence compris entre 50/50 et 90/10.

19. Dispersion selon l'une des revendications 12 à 18, **caractérisée en ce qu'**elle comprend au moins un épaississant.

20. Dispersion selon la revendication précédente, **caractérisée en ce que** l'épaississant est choisi parmi les polysaccharides comme la gomme xanthane, le guar, seuls ou en mélanges.

21. Dispersion selon l'une des revendications 19 ou 20, **caractérisée en ce que** l'épaississant est à une teneur comprise entre 0,1 et 2 % en poids de l'émulsion et de la phase aqueuse externe continue.

22. Dispersion selon l'une des revendications 12 à 21, **caractérisée en ce que** la phase aqueuse externe continue comprend au moins un sel choisi parmi les halogénures de métaux alcalins ou alcalino-terreux, ou les sulfates de métaux alcalin ou alcalino-terreux, ou leurs mélange ; la concentration en sel dans la phase aqueuse externe continue étant comprise entre 0,05 et 1 mol/l, de préférence 0,1 à 0,4 mol/l.

23. Dispersion selon l'une des revendications 12 à 21, **caractérisée en ce que** la phase aqueuse externe continue comprend au moins un sucre, ou au moins un polysaccharide, ou leurs mélanges ; la concentration en sucre et/ou polysaccharide étant telle que la pression osmotique de la phase aqueuse externe continue comprenant le sucre et/ou polysaccharide correspond à la pression osmotique d'une phase aqueuse interne comprenant 0,05 à 1 mol/l de sel.

24. Dispersion, **caractérisée en ce qu'**elle comprend l'émulsion selon l'une des revendications 1 à 11 dispersée dans une phase organique externe continue comprenant un agent stabilisant comportant au moins un copolymère peigne ou à blocs, dont une fraction est soluble dans la phase dispersée, l'autre dans la phase organique externe continue, la fraction soluble dans la phase organique externe continue étant supérieure à la fraction soluble dans la phase dispersée.

25. Dispersion, selon la revendication 24, **caractérisée en ce que** le rapport pondéral d'émulsion par rapport à la phase organique externe continue est compris entre 30/70 et 90/10, de préférence compris entre 50/50 et 90/10.

26. Procédé de préparation de l'émulsion selon l'une des revendications 1 à 11, **caractérisée en ce que** l'on prépare, d'une part un premier mélange comprenant la phase dispersée comprenant éventuellement la matière active, et d'autre part, un deuxième mélange comprenant la phase continue et le polymère ; puis on ajoute le premier mélange au second, sous agitation.

27. Procédé de préparation de la dispersion selon l'une des revendications 12 à 23, **caractérisée en ce que** l'on prépare un mélange de la phase aqueuse externe continue comprenant le tensioactif et/ou le polymère amphiphile non ionique et éventuellement le tensioactif anionique, auquel on ajoute l'émulsion obtenue selon la revendication 26, puis on ajoute éventuellement une solution aqueuse d'épaississant à l'émulsion ainsi obtenue.

28. Procédé de préparation de la dispersion selon l'une des revendications 24 à 25, **caractérisée en ce que** l'on prépare un mélange de la phase organique externe continue comprenant l'agent stabilisant, auquel on ajoute l'émulsion obtenue selon la revendication 26.

29. Utilisation de l'émulsion selon l'une des revendications 1 à 11, dans des formulations destinées au traitement de la peau et/ou du cheveu.

30. Utilisation de la dispersion selon l'une des revendications 12 à 25, dans des formulations destinées au traitement de la peau et/ou du cheveu.

## Claims

1. Emulsion comprising two nonaqueous liquids, L1 and L2, which are mutually immiscible, **characterized in that**:
- the liquid L1 is a silicone and represents the continuous phase of the emulsion;
- the emulsion is stabilized by at least one block copolymer, one fraction of the copolymer, according to Bancroft's rule, being soluble in the disperse phase, another fraction, according to Bancroft's rule, being soluble in the continuous phase, the fraction soluble in the continuous phase being greater than the fraction soluble in the disperse phase.

2. Emulsion according to the preceding claim, **characterized in that** the liquid L1 is selected from silicones, alone or in a mixture, which are composed in whole or in part of units of formula:
R'₃₋ₐRₐSiO_{½} (unit M) and/or R₂SiO (unit D)
in which formulae:
- a is an integer from 0 to 3;
- the radicals R are identical or different and represent:
- a saturated or unsaturated aliphatic hydrocarbon group containing 1 to 10 carbon atoms;
- an aromatic hydrocarbon group containing 6 to 13 carbon atoms;
- a polar organic group bonded to the silicon by an Si-C or Si-O-C bond;
- the radicals R' are identical or different and represent:
- a saturated or unsaturated aliphatic hydrocarbon group containing 1 to 10 carbon atoms;
- an aromatic hydrocarbon group containing 6 to 13 carbon atoms;
- an -OH function;
- an amino or amido group containing 1 to 6 carbon atoms, bonded to the silicon by an Si-N bond.

3. Emulsion according to one of the preceding claims,
**characterized in that** the liquid L2 is selected from:
- organic waxes/fats/oils of animal or plant origin;
- mineral waxes/oils;
- products obtained from the alcoholysis of the aforementioned oils;
- essential oils;
- mono-, di- and tri-glycerides; '
- saturated or unsaturated fatty acids containing 10 to 40 carbon atoms; the esters of such acids with alcohol containing 1 to 6 carbon atoms;
- saturated or unsaturated monoalcohols containing 2 to 40 carbon atoms;
- polyols containing 2 and 10 carbon atoms; these compounds being used alone or in a mixture.

4. Emulsion according to one of the preceding claims, **characterized in that** the proportion by weight of liquid L2 relative to liquid L1 is between 10/90 and 90/10, preferably between 30/70 and 50/50.

5. Emulsion according to one of the preceding claims,
**characterized in that** the block soluble in L1 of the block copolymer derives from a polysiloxane chosen from the silicones according to Claim 2, preferably, said polysiloxane carries reactive functions.

6. Emulsion according to one of the preceding claims, **characterized in that** the block soluble in L2 of the block copolymer derives from the polymerization of at least one monomer selected from the following monomers:
- esters of linear, branched, cyclic or aromatic monocarboxylic or polycarboxylic acids containing at least one ethylenic unsaturation,
- α,β-ethylenically unsaturated nitriles, vinyl ethers, vinyl esters, vinylaromatic monomers, and vinyl halides or vinylidene halides,
- linear or branched, aromatic or nonaromatic hydrocarbon monomers containing at least one ethylenic unsaturation,
alone or in mixtures, and the macromonomers deriving from such monomers.

7. Emulsion according to one of the preceding claims, **characterized in that** the copolymer is a copolymer comprising at least three blocks.

8. Emulsion according to one of the preceding claims, **characterized in that** the amount of copolymer represents from 0.5 to 10% by weight of the disperse phase.

9. Emulsion according to one of the preceding claims, **characterized in that** the disperse phase comprises at least one active substance soluble in said disperse phase.

10. Emulsion according to the preceding claim, **characterized in that** the active substance is selected from the following active substances which can be used in the field of the treatment of the skin and/or hair:
- lipophilic vitamins;
- UV absorbers; antiaging agents;
- anticellulite agents;
- antiacne agents;
- antimicrobial agents; bactericides;
- aromas; essential oils; perfumes;
- styling agents and/or fixatives for the hair;
alone or in mixtures.

11. Emulsion according to the preceding claim, **characterized in that** the amount of hydrophobic active substance(s) represents 10 to 50% by weight of the disperse phase.

12. Dispersion **characterized in that** it comprises the emulsion according to one of Claims 1 to 11 dispersed in a continuous external aqueous phase comprising at least one nonionic surfactant and/or at least one nonionic amphiphilic polymer, optionally in combination with one or more anionic surfactants and/or anionic amphiphilic polymers.

13. Dispersion according to the preceding claim, **characterized in that** the nonionic, preferably polyoxyalkylenated, surfactant at least partly miscible in the external aqueous phase is selected from at least one of the following surfactants:
- alkoxylated fatty alcohols
- alkoxylated triglycerides
- alkoxylated fatty acids
- alkoxylated sorbitan esters
- alkoxylated fatty amines
- alkoxylated di(1-phenylethyl)phenols
- alkoxylated tri(1-phenylethyl)phenols
- alkoxylated alkylphenols the number of alkoxylated units, more particularly oxyethylenated and/or oxypropylenated units, is such that the HLB value is greater than or equal to 10.

14. Dispersion according to one of Claims 12 or 13, **characterized in that** the amphiphilic polymer of the external aqueous phase is selected from polymers at least partly miscible in the external aqueous phase and preferably from polyethylene glycol/polypropylene glycol/polyethylene glycol triblock copolymers.

15. Dispersion according to one of Claims 12 to 14,
**characterized in that** the amount of nonionic surfactant and/or of nonionic amphiphilic polymer is between 0.5 and 10% by weight relative to the weight of the emulsion, preferably between 1 and 5% by weight of the emulsion.

16. Dispersion according to one of Claims 12 to 15, **characterized in that** the anionic surfactant is selected from at least one of the following surfactants:
- alkyl ester sulfonates, alkylbenzenesulfonates, primary or secondary alkylsulfonates, alkylglycerol sulfonates, sulfonated polycarboxylic acids, and paraffinsulfonates;
- alkyl sulfates;
- alkyl ether sulfates;
- alkylamide sulfates;
- salts of saturated or unsaturated fatty acids, N-acyl-N-alkyltaurates, alkylisethionates, alkylsuccinamates and alkylsulfosuccinates, sulfosuccinate monoesters or diesters, N-acylsarcosinates, and polyethoxycarboxylates; and
- alkyl and/or alkyl ether and/or alkylaryl ether phosphate esters, alone or in a mixture.

17. Dispersion according to the preceding claim, **characterized in that** the amount of anionic surfactant is between 0.5 and 5% by weight relative to the weight of the emulsion, preferably between 0.5 and 2% by weight relative to the same reference.

18. Dispersion according to one of Claims 12 to 17, **characterized in that** the weight ratio of emulsion relative to the continuous external aqueous phase is between 30/70 and 90/10, preferably between 50/50 and 90/10.

19. Dispersion according to one of Claims 12 to 18, **characterized in that** it comprises at least one thickener.

20. Dispersion according to the preceding claim,
**characterized in that** the thickener is selected from polysaccharides, such as xanthan gum and guar, alone or in mixtures.

21. Dispersion according to one of Claims 19 or 20, **characterized in that** the thickener is in an amount of between 0.1 and 2% by weight of the emulsion and of the continuous external aqueous phase.

22. Dispersion according to one of Claims 12 to 21,
**characterized in that** the continuous external aqueous phase comprises at least one salt selected from alkali metal or alkaline-earth metal halides, or alkali metal or alkaline-earth metal sulfates, or a mixture thereof, the salt concentration in the continuous external aqueous phase being between 0.05 and 1 mol/l, preferably from 0.1 to 0.4 mol/l.

23. Dispersion according to one of Claims 12 to 21,
**characterized in that** the continuous external aqueous phase comprises at least one sugar, or at least one polysaccharide, or mixtures thereof; the sugar and/or polysaccharide concentration is such that the osmotic pressure of the continuous external aqueous phase comprising the sugar and/or polysaccharide corresponds to the osmotic pressure of an internal aqueous phase containing from 0.05 to 1 mol/l of salt.

24. Dispersion **characterized in that** it comprises the emulsion according to one of Claims 1 to 11 dispersed in a continuous external organic phase comprising a stabilizer comprising at least one comb or block copolymer, one fraction of which is soluble in the disperse phase and the other in the continuous external organic phase, the fraction soluble in the continuous external organic phase being greater than the fraction soluble in the disperse phase.

25. Dispersion according to Claim 24, **characterized in that** the weight ratio of emulsion relative to the continuous external organic phase is between 30/70 and 90/10, preferably between 50/50 and 90/10.

26. Method of preparing the emulsion according to one of Claims 1 to 11, **characterized in that**, on the one hand, a first mixture comprising the disperse phase optionally comprising the active substance is prepared and, on the other hand, a second mixture comprising the continuous phase and the polymer is prepared, and then the first mixture is added to the second, with stirring.

27. Method of preparing the dispersion according to one of Claims 12 to 23, **characterized in that** a mixture of the continuous external aqueous phase comprising the surfactant and/or the nonionic amphiphilic polymer and optionally the anionic surfactant is prepared, and the emulsion obtained according to Claim 26 is added thereto, after which, optionally, an aqueous thickener solution is added to the emulsion thus obtained.

28. Method of preparing the dispersion according to one of Claims 24 and 25, **characterized in that** a mixture of the continuous external organic phase comprising the stabilizer is prepared, and the emulsion obtained according to Claim 26 is added thereto.

29. Use of the emulsion according to one of Claims 1 to 11 in formulations intended for the treatment of the skin and/or hair.

30. Use of the dispersion according to one of Claims 12 to 25 in formulations intended for the treatment of the skin and/or hair.

## Patentansprüche

1. Emulsion, die zwei nicht-wässrige Flüssigkeiten L1 und L2 umfasst, welche miteinander nicht mischbar sind, **dadurch gekennzeichnet, dass**:
- die Flüssigkeit L1 ein Silikon ist und die kontinuierliche Phase der Emulsion darstellt;
- die Emulsion durch mindestens ein Block-Copolymer stabilisiert wird, wobei ein Teil des Copolymers gemäß der Bancroft-Regel in der dispersen Phase löslich ist, ein anderer Teil gemäß der Bancroft-Regel in der kontinuierlichen Phase löslich ist, und der in der kontinuierlichen Phase lösliche Teil größer ist als der in der dispersen Phase lösliche Teil.

2. Emulsion gemäß dem vorhergehenden Anspruch, **dadurch gekennzeichnet, dass** die Flüssigkeit L1 ausgewählt ist aus Silikonen, einzeln oder in einem Gemisch, die ganz oder teilweise aufgebaut sind aus Motiven der Formel:
R'₃₋ₐRₐSiO_{1/2} (Motiv M) und/oder R₂SiO (Motiv D),
Formeln, in denen:
- a eine ganze Zahl zwischen 0 und 3 ist;
- die Reste R gleich oder verschieden voneinander sind und darstellen:
- eine gesättigte oder ungesättigte aliphatische Kohlenwasserstoffgruppe, die 1 bis 10 Kohlenstoffatome enthält;
- eine aromatische Kohlenwasserstoffgruppe, die 6 bis 13 Kohlenstoffatome enthält;
- eine polare organische Gruppe, die mit dem Silizium über eine Si-C-oder eine Si-O-C-Brücke verbunden ist;
- die Reste R' gleich oder verschieden voneinander sind und darstellen:
- eine gesättigte oder ungesättigte aliphatische Kohlenwasserstoffgruppe, die 1 bis 10 Kohlenstoffatome enthält;
- eine aromatische Kohlenwasserstoffgruppe, die 6 bis 13 Kohlenstoffatome enthält;
- eine -OH-Gruppe;
- eine Amino- oder Amidogruppe, die 1 bis 6 Kohlenstoffatome enthält und die mit dem Silizium über eine Si-N-Brücke verbunden ist.

3. Emulsion gemäß einem der vorhergehenden Ansprüche, **dadurch gekennzeichnet, dass** die Flüssigkeit L2 ausgewählt ist aus:
- organischen Ölen/Fetten/Wachsen tierischen oder pflanzlichen Ursprungs;
- mineralischen Ölen/Wachsen;
- Produkten, die aus der Alkoholyse der vorgenannten Öle stammen;
- etherischen Ölen;
- Mono-, Di- und Triglyzeriden;
- gesättigten oder nicht-gesättigten Fettsäuren, die 10 bis 40 Kohlenstoffatome umfassen; Estern aus diesen Säuren und Alkohol, der 1 bis 6 Kohlenstoffatome umfasst;
- gesättigten oder nicht-gesättigten Monoalkoholen, die 2 bis 40 Kohlenstoffatome umfassen;
- Polyolen, die 2 bis 10 Kohlenstoffatome umfassen;
wobei diese Zusammensetzungen einzeln oder in einem Gemisch verwendet werden.

4. Emulsion gemäß einem der vorhergehenden Ansprüche, **dadurch gekennzeichnet, dass** das Gewichtsverhältnis von Flüssigkeit L2 zu Flüssigkeit L1 zwischen 10/90 und 90/10, vorzugsweise zwischen 30/70 und 50/50 liegt.

5. Emulsion gemäß einem der vorhergehenden Ansprüche, **dadurch gekennzeichnet, dass** der in L1 lösliche Block des Block-Copolymers von einem Polysiloxan stammt, das ausgewählt ist aus den Silikonen gemäß Anspruch 2, wobei dieses Polysiloxan vorzugsweise ein Träger reaktiver Gruppen ist.

6. Emulsion gemäß einem der vorhergehenden Ansprüche, **dadurch gekennzeichnet, dass** der in L2 lösliche Block des Block-Copolymers aus der Polymerisation von mindestens einem Monomer stammt, das ausgewählt ist aus folgenden Monomeren:
- Estern der linearen, verzweigten, zyklischen oder aromatischen Mono- oder Polycarbonsäuren, die mindestens eine ethylenisch ungesättigte Einheit umfassen,
- αβ-ethylenisch ungesättigten Nitrilen, Vinylethern, Vinylestern, vinylaromatischen Monomeren, Vinyl- oder Vinylidenhalogeniden,
- linearen oder verzweigten, aromatischen oder nicht-aromatischen Kohlenwasserstoffmonomeren, die mindestens eine ethylenisch ungesättigte Einheit umfassen,
einzeln oder in Gemischen, sowie Makromonomeren, die von diesen Monomeren stammen.

7. Emulsion gemäß einem der vorhergehenden Ansprüche, **dadurch gekennzeichnet, dass** das Copolymer ein Copolymer ist, das mindestens drei Blöcke umfasst.

8. Emlusion gemäß einem der vorhergehenden Ansprüche, **dadurch gekennzeichnet, dass** die Menge des Copolymers 0,5 bis 10 Gew.-% der dispersen Phase darstellt.

9. Emulsion gemäß einem der vorhergehenden Ansprüche, **dadurch gekennzeichnet, dass** die disperse Phase mindestens einen aktiven Stoff umfasst, der in dieser dispersen Phase löslich ist.

10. Emulsion gemäß dem vorhergehenden Anspruch, **dadurch gekennzeichnet, dass** der aktive Stoff ausgewählt ist aus folgenden aktiven Stoffen, die auf dem Gebiet der Behandlung der Haut und/oder der Haare verwendbar sind:
- lipophile Vitamine;
- UV-absorbierende Wirkstoffe; Anti-Aging-Wirkstoffe;
- Anti-Cellulitis-Wirkstoffe;
- Anti-Akne-Wirkstoffe;
- antimikrobielle Wirkstoffe; Bakterizide;
- Aromastoffe; essentielle Öle; Parfums;
- Frisier- und/oder Fixiermittel für die Haare;
einzeln oder in Gemischen.

11. Emulsion gemäß dem vorhergehenden Anspruch, **dadurch gekennzeichnet, dass** der Gehalt an aktivem hydrophobem Stoff/aktiven hydrophoben Stoffen 10 bis 50 Gew.-% der dispersen Phase darstellt.

12. Dispersion, **dadurch gekennzeichnet, dass** sie die Emulsion gemäß einem der Ansprüche 1 bis 11 umfasst, die in einer äußeren kontinuierlichen wässrigen Phase dispergiert ist, welche mindestens ein nicht-ionisches Tensid und/oder mindestens ein nicht-ionisches amphiphiles Polymer umfasst, das/die gegebenenfalls mit einem oder mehreren anionischen Tensiden und/oder anionischen amphiphilen Polymeren assoziiert ist/sind.

13. Dispersion gemäß dem vorhergehenden Anspruch, **dadurch gekennzeichnet, dass** das nicht-ionische Tensid, vorzugsweise ein polyoxyalkyleniertes, das zumindest teilweise mit der äußeren wässrigen Phase mischbar ist, ausgewählt ist aus mindestens einem der folgenden Tenside:
- alkoxylierten Fettalkoholen
- alkoxylierten Triglyzeriden
- alkoxylierten Fettsäuren
- alkoxylierten Sorbitanestern
- alkoxylierten Fettaminen
- alkoxylierten Di(phenyl-1-ethyl)-phenolen
- alkoxylierten Tri(phenyl-1-ethyl)-phenolen
- alkoxylierten Alkylphenolen
wobei die Anzahl der alkoxylierten, insbesondere der oxyethylenierten und/oder oxypropylenierten Motive derart ist, dass der HLB-Wert größer oder gleich 10 ist.

14. Dispersion gemäß einem der Ansprüche 12 oder 13, **dadurch gekennzeichnet, dass** das amphiphile Polymer der äußeren wässrigen Phase ausgewählt ist aus Polymeren, die zumindest teilweiseeil mit der äußeren wässrigen Phase mischbar sind, und vorzugsweise aus den Dreiblock-Copolymeren Polyethylenglykol/Polypropylenglykol/ Polyethylenglykol.

15. Dispersion gemäß einem der Ansprüche 12 bis 14, **dadurch gekennzeichnet, dass** der Gehalt an nicht-ionischem Tensid und/oder nicht-ionischem amphiphilen Polymer zwischen 0,5 und 10 Gew.-% bezüglich des Gewichts der Emulsion, vorzugsweise zwischen 1 und 5 Gew.-% der Emulsion liegt.

16. Dispersion gemäß einem der Ansprüche 12 bis 15, **dadurch gekennzeichnet, dass** das anionische Tensid ausgewählt ist aus mindestens einem der folgenden Tenside:
- Alkylestersulfonaten, Alkylbenzolsulfonaten, primären oder sekundären Alkylsulfonaten, Alkylglyzerinsulfonaten, sulfonierten Polycarbonsäuren, Sulfonaten von Paraffin;
- Alkylsulfaten;
- Alkylethersulfaten;
- Alkylamidsulfaten;
- Salzen der gesättigten oder nicht-gesättigten Fettsäuren, N-Acyl-N-alkyltauraten, Alkylisethionaten, Alkylsuccinamaten und Alkylsulfosuccinaten, Monoestern oder Diestern von Sulfosuccinaten, N-Acylsarconsinaten, Polyethoxycarboxylaten; und
- Alkyl- und/oder Alkylether- und/oder Alkylarylether-Phosphatestern,
einzeln oder in einem Gemisch.

17. Dispersion gemäß dem vorhergehenden Anspruch, **dadurch gekennzeichnet, dass** der Gehalt an anionischem Tensid zwischen 0,5 und 5 Gew.-% bezüglich des Gewichts der Emulsion liegt, vorzugsweise zwischen 0,5 und 2 Gew.-% bezüglich der gleichen Basis.

18. Dispersion gemäß einem der Ansprüche 12 bis 17, **dadurch gekennzeichnet, dass** das Gewichtsverhältnis der Emulsion bezüglich der äußeren kontinuierlichen wässrigen Phase zwischen 30/70 und 90/10, vorzugsweise zwischen 50/50 und 90/10 liegt.

19. Dispersion gemäß einem der Ansprüche 12 bis 18, **dadurch gekennzeichnet, dass** sie mindestens ein Verdickungsmittel enthält.

20. Dispersion gemäß dem vorhergehenden Anspruch, **dadurch gekennzeichnet, dass** das Verdickungsmittel ausgewählt ist aus Polysacchariden wie Xanthan und Guar, einzeln oder in Gemischen.

21. Dispersion gemäß einem der Ansprüche 19 oder 20, **dadurch gekennzeichnet, dass** das Verdickungsmittel einen Gehalt aufweist, der zwischen 0,1 und 2 Gew.-% der Emulsion und der äußeren kontinuierlichen wässrigen Phase liegt.

22. Dispersion gemäß einem der Ansprüche 12 bis 21, **dadurch gekennzeichnet, dass** die äußere kontinuierliche wässrige Phase mindestens ein Salz umfasst, das ausgewählt ist aus Alkali- oder Erdalkalimetallhalogeniden, oder Alkali- oder Erdalkalimetallsulfaten, oder deren Gemischen; wobei die Konzentration des Salzes in der äußeren kontinuierlichen wässrigen Phase zwischen 0,05 und 1 mol/l liegt, vorzugsweise bei 0,1 bis 0,4 mol/l.

23. Dispersion gemäß einem der Ansprüche 12 bis 21, **dadurch gekennzeichnet, dass** die äußere kontinuierliche wässrige Phase mindestens einen Zucker oder mindesten ein Polysaccharid oder deren Gemische umfasst; wobei die Konzentration an Zucker und/oder Polysaccharid derart ist, dass der osmotische Druck der externen kontinuierlichen wässrigen Phase, die den Zucker und/oder das Polysaccharid umfasst, dem osmotischen Druck einer inneren wässrigen Phase entspricht, die 0,05 bis 1 mol/l Salz umfasst.

24. Dispersion, **dadurch gekennzeichnet, dass** sie eine Emulsion gemäß einem der Ansprüche 1 bis 11 umfasst, welche in einer äußeren kontinuierlichen organischen Phase dispergiert ist, die ein stabilisierendes Mittel umfasst, das mindestens ein kammförmiges oder ein Block-Copolymer aufweist, wobei ein Teil in der dispersen Phase löslich ist, der andere in der äußeren kontinuierlichen organischen Phase, und der in der äußeren kontinuierlichen organischen Phase lösliche Teil größer ist als der in der dispersen Phase lösliche Teil.

25. Dispersion gemäß Anspruch 24, **dadurch gekennzeichnet, dass** das Gewichtsverhältnis der Emulsion bezüglich der äußeren kontinuierlichen organischen Phase zwischen 30/70 und 90/10, vorzugsweise zwischen 50/50 und 90/10 liegt.

26. Herstellungsverfahren einer Emulsion gemäß einem der Ansprüche 1 bis 11, **dadurch gekennzeichnet, dass** man einerseits ein erstes Gemisch, das die disperse Phase umfasst, welche gegebenenfalls den aktiven Stoff umfasst, und andererseits ein zweites Gemisch, das die kontinuierliche Phase und das Polymer umfasst, herstellt; und anschließend unter Rühren das erste Gemisch zum zweiten zugibt.

27. Herstellungsverfahren einer Dispersion gemäß einem der Ansprüche 12 bis 23, **dadurch gekennzeichnet, dass** man ein Gemisch der äußeren kontinuierlichen wässrigen Phase, die das Tensid und/oder das nicht-ionische amphiphile Polymer und gegebenenfalls das anionische Tensid umfasst, herstellt, wozu man eine Emulsion, die gemäß Anspruch 26 erhalten wird, zugibt, und anschließend gegebenenfalls eine wässrige Lösung des Verdickungsmittels zur so erhaltenen Emulsion zugibt.

28. Herstellungsverfahren einer Dispersion gemäß einem der Ansprüche 24 bis 25, **dadurch gekennzeichnet, dass** man ein Gemisch der äußeren kontinuierlichen organischen Phase, die das stabilisierende Mittel umfasst, herstellt, wozu man eine Emulsion, die gemäß Anspruch 26 erhalten wird, zugibt.

29. Verwendung einer Emulsion gemäß einem der Ansprüche 1 bis 11 in Formulierungen, die zur Behandlung der Haut und/oder der Haare bestimmt sind.

30. Verwendung einer Dispersion gemäß einem der Ansprüche 12 bis 25 in Formulierungen, die zur Behandlung der Haut und/oder der Haare bestimmt sind.
